# EUROPEAN PATENT APPLICATION

(11) **EP 4 835 994 A1**
(43) Date of publication of application: **04.11.2026**
(21) Application number: 24916334.6
(22) Date of filing: 30.07.2024
(51) Int. Cl.: H01M 4/36

(54) **SECONDARY BATTERY, PREPARATION METHOD THEREFOR, AND ELECTRICAL APPARATUS**

(30) Priority: 08.01.2024 CN 202410027059
(71) Applicant: Contemporary Amperex Technology Co., Limited, Ningde, Fujian 352100 (CN)
(72) Inventor: BIE, Changfeng, Ningde, Fujian 352100 (CN); CHEN, Xudong, Ningde, Fujian 352100 (CN); HUANG, Yang, Ningde, Fujian 352100 (CN); LIN, Zilong, Ningde, Fujian 352100 (CN); DU, Wanying, Ningde, Fujian 352100 (CN); WU, Yichen, Ningde, Fujian 352100 (CN); LIU, Huaiwen, Ningde, Fujian 352100 (CN); NI, Huan, Ningde, Fujian 352100 (CN); LIU, Na, Ningde, Fujian 352100 (CN)
(74) Representative: Lorenz Seidler Gossel Part. mbB
(86) International application number: PCT/CN2024/108603
(87) International publication number: WO 2025/148278

(57) **Abstract**

A secondary battery, comprising: a positive electrode piece, a negative electrode piece, a separator arranged between the positive electrode piece and the negative electrode piece, and an electrolyte comprising an electrolyte salt and a solvent; the positive electrode piece comprises a positive current collector and a positive film layer arranged on at least one surface of the positive current collector; the positive electrode film layer comprises first particles, the first particles comprising first manganese iron phosphate particles, the primary average particle size s1 of the first particles being 120-600 nm, and the manganese dissolution amount of the secondary battery being ≤50 ppm.

## Description

### CROSS-REFERENCE TO RELATED APPLICATIONS

The present application claims priority to Chinese Patent Application 202410027059.3, entitled "SECONDARY BATTERY, PREPARATION METHOD THEREFOR, AND ELECTRICAL APPARATUS" filed with the Chinese Patent Office on January 8, 2024, which is incorporated by reference in the present application.

### TECHNICAL FIELD

The present application relates to the technical field of secondary batteries, and specifically relates to a secondary battery, a preparation method therefor, and an electrical apparatus.

### BACKGROUND

As a positive electrode active material for a lithium-ion battery, lithium iron manganese phosphate has higher voltage platform, theoretical energy density, and theoretical gram capacity, and lower cost than lithium iron phosphate. However, lithium iron manganese phosphate has poorer high-temperature (at 60°C) storage performance than lithium iron phosphate.

Therefore, there is a need to provide a positive electrode active material containing lithium iron manganese phosphate, which has good high-temperature storage performance.

### SUMMARY

The present application is proposed in view of the above issues and aims to provide a secondary battery with good high-temperature storage performance, a preparation method therefor, and an electrical apparatus.

The inventors have discovered that by adopting the technical solution in the present application, the above objectives can be achieved.

In a first aspect, the present application provides a secondary battery, including:
a positive electrode plate, a negative electrode plate, a separator arranged between the positive electrode plate and the negative electrode plate, and an electrolyte solution including an electrolyte salt and a solvent; where
the positive electrode plate includes a positive electrode current collector and a positive electrode film layer arranged on at least one surface of the positive electrode current collector;
the positive electrode film layer includes first particles, the first particles including first lithium iron manganese phosphate particles, a primary average particle size s1 of the first particles being 120-600 nm; and
a manganese dissolution amount of the secondary battery is ≤50 ppm.

The secondary battery in the present application has good high-temperature storage performance. In addition, the secondary battery in the present application also has good high-temperature cycling performance.

In any embodiment, the positive electrode film layer further includes second particles, the second particles including first lithium iron phosphate particles and/or second lithium iron manganese phosphate particles, a primary average particle size s2 of the second particles meeting 500nm≤s2≤3000nm, and a Mn/Fe molar ratio of the second lithium iron manganese phosphate particles being ≤1.5.

If the positive electrode film layer also includes the second particles, the second particles including the first lithium iron phosphate particles and/or the second lithium iron manganese phosphate particles, the primary average particle size s2 of the second particles meeting 500nm≤s2≤3000nm, and the Mn/Fe molar ratio of the second lithium iron manganese phosphate particle being ≤1.5, the secondary battery in the present application has low manganese dissolution amount, good high-temperature storage performance, and good high-temperature cycling performance.

In any embodiment, on the basis of the total area of primary particles in the positive electrode film layer, an area ratio of the first particles is 60%-98%, and the area ratio of the second particles is 2%-40%.

In any embodiment, the positive electrode film layer further includes first lithium iron phosphate particles, a primary average particle size s2' of the first lithium iron phosphate particles meeting 500nm≤s2'≤3000nm.

If the positive electrode film layer also includes the first lithium iron phosphate particles, the primary average particle size s2' of the first lithium iron phosphate particles meeting 500nm≤s2'≤3000nm, the secondary battery in the present application has low manganese dissolution amount, good high-temperature storage performance, good high-temperature cycling performance, and high solid content of a positive electrode slurry.

In any embodiment, on the basis of the total area of primary particles in the positive electrode film layer, the area ratio of the first lithium iron manganese phosphate particles is 70%-98%, and the area ratio of the first lithium iron phosphate particles is 2%-30%.

In any embodiment, the positive electrode film layer further includes third particles, the third particles including second lithium iron phosphate particles and/or third lithium iron manganese phosphate particles, a primary average particle size s3 of the third particles meeting 30nm≤s3≤200nm, and the Mn/Fe molar ratio of the third lithium iron manganese phosphate particles being ≤1.5.

In any embodiment, on the basis of the total area of primary particles in the positive electrode film layer, the area ratio of the first particles is 70%-97%; the area ratio of the second particles is 2%-25%; and the area ratio of the third particles is 1%-10%.

In any embodiment, the positive electrode film layer further includes second lithium iron phosphate particles, a primary average particle size s3' of the second lithium iron phosphate particles meeting 30nm≤s3≤200nm.

If the positive electrode film layer also includes the second lithium iron phosphate particles, the primary average particle size s3' of the second lithium iron phosphate particles meeting 30nm≤s3'≤200nm, the secondary battery in the present application has low manganese dissolution amount, good high-temperature storage performance, and good high-temperature cycling performance.

In any embodiment, on the basis of the total area of primary particles in the positive electrode film layer, the area ratio of the first lithium iron manganese phosphate particles is 70%-97%; the area ratio of the first lithium iron phosphate particles is 2%-25%; and the area ratio of the second lithium iron phosphate particles is 1%-10%.

In any embodiment, the first lithium iron manganese phosphate particles have a molecular formula of Liₘ₁Feₓ₁Mnᵣ₁P_{y1}Oⱼ₁Q1_{q1}, in which, Q1 includes at least one selected from the group consisting of Al, Na, K, Mg, Cu, Cr, Zn, Pb, Ca, Co, Ni, Sr, Nb, V, Ti, B, S, Si, N, F, Cl, Br, 0.95≤m1≤1.15, x1>0, r1>0, 0.9≤x1+r1≤1, 0.95≤y1≤1, 3.5≤j1≤4, 0≤q1≤0.1, and/or
the second lithium iron manganese phosphate particles have the molecular formula of Liₘ₂Feₓ₂Mnᵣ₂P_{y2}Oⱼ₂Q2_{q2}, in which, Q2 includes at least one selected from the group consisting of Al, Na, K, Mg, Cu, Cr, Zn, Pb, Ca, Co, Ni, Sr, Nb, V, Ti, B, S, Si, N, F, Cl, and Br, 0.95≤m2≤1.15, x2>0, r2>0, r2/x2≤1.5; 0.9≤x2+r2≤1, 0.95≤y2≤1, 3.5≤j2≤4, 0≤q2≤0.1, and/or
the third lithium iron manganese phosphate particles have the molecular formula of Liₘ₃Feₓ₃Mnᵣ₃P_{y3}Oⱼ₃Q3_{q3}, in which, Q3 includes at least one selected from the group consisting of Al, Na, K, Mg, Cu, Cr, Zn, Pb, Ca, Co, Ni, Sr, Nb, V, Ti, B, S, Si, N, F, Cl, and Br, 0.95≤m3≤1.15, x3>0, r3>0, r3/x3≤1.5; 0.9≤x3+r3≤1, 0.95≤y3≤1, 3.5≤j3≤4, 0≤q3≤0.1, and/or
the first lithium iron phosphate particles have the molecular formula of Liₘ₄Feₓ₄P_{y4}Oⱼ₄Q4_{q4}, in which, Q4 includes at least one selected from the group consisting of Al, Na, K, Mg, Cu, Mn, Cr, Zn, Pb, Ca, Co, Ni, Sr, Nb, V, Ti, B, S, Si, N, F, Cl, and Br, 0.95≤m4≤1.15, 0.9≤x4≤1, 0.95≤y4≤1, 3.5≤j4≤4, 0<q4≤0.1, and/or
the second lithium iron phosphate particles have the molecular formula of Liₘ₅Feₓ₅P_{y5}Oⱼ₅Q2_{q5}, in which, Q5 includes at least one selected from the group consisting of Al, Na, K, Mg, Cu, Mn, Cr, Zn, Pb, Ca, Co, Ni, Sr, Nb, V, Ti, B, S, Si, N, F, Cl, and Br, 0.95≤m5≤1.15, 0.9≤x5≤1, 0.95≤y5≤1, 3.5≤j5≤4, and 0≤q5≤0.1.

In any embodiment, Q4 in the first lithium iron phosphate particles includes at least one selected from the group consisting of Ti, V, Mg, and Nb; and the content of Ti, V, Mg and/or Nb is 1,000-10,000 ppm on the basis of the total weight of the first lithium iron phosphate particles.

In any embodiment, a specific surface area (BET) of the first lithium iron phosphate particles is 3 m²/g-8 m²/g.

If the specific surface area (BET) of the first lithium iron phosphate particles is 3 m²/g-8 m²/g, the secondary battery in the present application has low manganese dissolution amount, high solid content of the positive electrode slurry, and high compacted density of a positive electrode plate.

In any embodiment, on the basis of the total weight of the first lithium iron phosphate particles, the carbon content of the first lithium iron phosphate particles is Cx4 wt%, in which, 0.8≤Cx4≤2.0.

In any embodiment, on the basis of the total weight of the first lithium iron phosphate particles, the carbon content of the first lithium iron phosphate particles is Cx4 wt%, and a ratio z4 of the specific surface area of the first lithium iron phosphate particles to Cx4 meets 1.5≤z4≤8.5.

In any embodiment, the specific surface area of the second lithium iron manganese phosphate particles is 5 m²/g-12 m²/g.

In any embodiment, on the basis of total weight of the second lithium iron manganese phosphate particles, the carbon content of the second lithium iron manganese phosphate particles is Cx2 wt%, in which, 0.8≤Cx2≤2.0.

In any embodiment, the primary average particle size s1' of the first lithium iron manganese phosphate particles is 150-210 nm, the primary average particle size s2' of the first lithium iron phosphate particles meets 870nm≤s2≤3000 nm, and/or the primary average particle size s3' of the second lithium iron phosphate particles meets 60 nm≤s3≤ 200 nm.

In any embodiment, a capacity ratio η of the first lithium iron phosphate particles is ≥88%, η is defined as follows:
a battery using the first lithium iron phosphate particles as the positive electrode active material is subjected to constant-current charge-discharge twice at a rate of 0.1 C within a voltage range of 2.0-3.75 V, and then subjected to constant-current charge-discharge once at a rate of 1 C; in the charge-discharge test at the rate of 1 C, a capacity value extracted at a discharge voltage of 3.2 V is recorded as C1, and the capacity value extracted at the discharge voltage of 2.0 V is recorded as C2, and η=C1/C2; and the charging process includes constant-voltage charge, the constant voltage is 3.75 V, and a constant voltage cutoff current is 50 µA.

In any embodiment, the first lithium iron phosphate particles meet at least one selected from the group consisting of (a)-(f):
(a) the Dv10 of the first lithium iron phosphate particles is ≥0.2µm;
(b) the Dv50 of the first lithium iron phosphate particles is 0.5-5 µm;
(c) the Dv90 of the first lithium iron phosphate particles is ≤10µm;
(d) the Dv99 of the first lithium iron phosphate particles is ≤12µm;
(e) a powder compacted density of the first lithium iron phosphate under 3 tons of pressure is ≥2.25g/cm³; and
(f) a powder resistivity of the first lithium iron phosphate is less than 60 Ω•cm.

In any embodiment, an aspect ratio of the second lithium iron phosphate particles is ≥1.3.

If the aspect ratio of the second lithium iron phosphate particles is ≥1.3, the secondary battery in the present application has good high-temperature storage performance, low manganese dissolution amount, good high-temperature cycling performance, and high gram capacity.

In any embodiment, a ratio W of an intensity of a (020) crystal plane diffraction peak to the intensity of a (211) crystal plane diffraction peak of the second lithium iron phosphate particles is ≥1.03.

If the ratio W of the intensity of the (020) crystal plane diffraction peak to the intensity of the (211) crystal plane diffraction peak of the second lithium iron phosphate particles is ≥1.03, the secondary battery in the present application has good high-temperature storage performance, low manganese dissolution amount, good high-temperature cycling performance, and high gram capacity.

In any embodiment, the first lithium iron phosphate particles are mainly obtained by the following preparation method:
providing raw materials containing at least a lithium source, an iron source, a phosphorus source, an optional carbon film-forming agent, an optional carbon source, and an optional modifier, and performing sintering at least twice, in which,
a temperature for the first sintering is 500°C-760°C, optionally, 550°C-720°C; and
the temperature for the second sintering is 700°C-800°C, optionally 720°C-780°C.

In any embodiment, the first lithium iron phosphate particles are mainly obtained by the following preparation method:
providing raw materials containing at least a lithium source, an iron source, a phosphorus source, a carbon source, a carbon film-forming agent, and a modifier, and performing sintering at least twice, in which,
the carbon content of the material after the first sintering is 0.01wt%-0.79wt%, optionally, 0.05wt%-0.4wt%; and
the carbon content of the material after the second sintering is 0.8wt%-2.0wt%, optionally, 1.0wt%-1.6wt%.

In any embodiment, the preparation method for the first lithium iron phosphate particles includes the following steps:
performing first pulverization after the first sintering, and performing second pulverization after the second sintering, in which,
the Dv50 of a product after the first pulverization is 300-1,200 nm, optionally, 400-1,100 nm; and
the Dv50 of the product after the second pulverization is 500-5,000 nm, optionally, 700-2,500 nm.

In a second aspect, the present application provides an electrical apparatus, including the secondary battery as described in the first aspect of the present application.

### BRIEF DESCRIPTION OF THE DRAWINGS

FIG. 1 is a schematic diagram of a secondary battery according to an embodiment of the present application.
FIG. 2 is an exploded view of the secondary battery in FIG. 1 according to an embodiment of the present application;
FIG. 3 is a schematic diagram of a battery module according to an embodiment of the present application;
FIG. 4 is a schematic diagram of a battery pack according to an embodiment of the present application;
FIG. 5 is an exploded view of the battery pack in FIG. 4 according to an embodiment of the present application;
FIG. 6 is a schematic diagram of an electrical apparatus using a secondary battery as a power source according to an embodiment of the present application.
FIG. 7 is a scanning electron microscope picture of first lithium iron phosphate particles with primary particle sizes marked according to an embodiment of the present application.

### Reference numerals:

1, battery pack; 2, upper box body; 3, low box body; 4, battery module; 5, secondary battery; 51, case; 52, electrode assembly; and 53, top cover assembly

### DETAILED DESCRIPTION

The specific embodiments of a secondary battery, a preparation method therefor, and an electrical apparatus disclosed in the present application are explained in detail below with appropriate reference to the accompanying drawings. However, some unnecessary details may be omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, condition "A or B" is met by either of the following: A is true (or exists) and B is false (or does not exist); A is false (or non-existent) and B is true (or exists); or both A and B are true (or exist).

As a positive electrode active material for a lithium-ion battery, lithium iron manganese phosphate has higher voltage platform, theoretical energy density, and theoretical gram capacity, and lower cost than lithium iron phosphate. However, lithium iron manganese phosphate has poorer high-temperature (at 60°C) storage performance than lithium iron phosphate. Therefore, there is a need to provide a positive electrode active material containing lithium iron manganese phosphate, which has good high-temperature storage performance.

On the basis of this, the present application proposes a technical solution to solve the above technical problems.

In a first aspect, the present application provides a secondary battery, including:
a positive electrode plate, a negative electrode plate, a separator arranged between the positive electrode plate and the negative electrode plate, and an electrolyte solution including an electrolyte salt and a solvent;
the positive electrode plate includes a positive electrode current collector and a positive electrode film layer arranged on at least one surface of the positive electrode current collector;
the positive electrode film layer includes first particles, the first particles including first lithium iron manganese phosphate particles, a primary average particle size s1 of the first particles being 120-600 nm; and
a manganese dissolution amount of the secondary battery is ≤50 ppm.

Lithium iron manganese phosphate has poor ionic and electronic conductivity, and is highly affected by the particle size; if a material contains lithium iron manganese phosphate with a large particle size, the solid-phase transport of lithium ions will be highly limited; and moreover, an electron transport path in an electrochemical reaction is long, resulting in a significant decrease in the gram capacity and kinetic performance of the material. Studies show that a surface of a lithium iron manganese phosphate material has high surface oxidation during charging; and due to Jahn-Teller effect, surface oxygen atoms are prone to side reactions with protons in the electrolyte solution, resulting in manganese dissolution and electrolyte solution loss. Therefore, during designing the particle size of the lithium iron manganese phosphate particles, it cannot contain too many small particles, that is, it is needed to control the content of micro powder at low level. Experiments show that the surface activity of small particles with the particle size less than 120 nm increases significantly. In the present application, lithium iron manganese phosphate with low manganese dissolution amount is utilized, and particle size optimization and selection are carried out, therefore, the secondary battery in the present application has good high-temperature storage performance and good high-temperature cycling performance.

In some embodiments, the primary average particle size s1 of the first particles can be 140-500 nm. In some embodiments, the primary average particle size s1 of the first particles can be 120 nm, 130 nm, 140 nm, 150 nm, 160 nm, 170 nm, 180 nm, 190 nm, 200 nm, 210 nm, 220 nm, 230 nm, 240 nm, 250 nm, 260 nm, 270 nm, 280 nm, 290 nm, 300 nm, 350 nm, 400 nm, 450 nm, 480 nm, 490 nm, 500 nm, 550 nm, 600 nm, or a range of any two of the above primary average particle sizes or a value within this range.

In the present application, the term "primary average particle size" refers to an average of the primary particle sizes of all particles, in which, the primary particle size is the longest distance between two connected points on an edge in a cross-sectional view.

The primary average particle size of the first particles can be measured using methods and devices known in the art. For example, it can be tested using a scanning electron microscope and an aspect ratio statistical method. Taking the first lithium iron manganese phosphate particles as an example, the positive electrode plate is cut via an argon ion beam perpendicular to a large surface to expose a cross section, and the cross section is photographed via the scanning electron microscope; the particle size of the first lithium iron manganese phosphate particles is statistically analyzed using the aspect ratio statistical method; specifically, the total number of the first lithium iron manganese phosphate particles with the primary particle size greater than 10 nm and a sum of the primary particle size of the first lithium iron manganese phosphate particles with the primary particle size greater than 10 nm can be counted in pictures from the scanning electron microscope, primary average particle size of first lithium iron manganese phosphate particles = total primary particle size of first lithium iron manganese phosphate particles/ total number of first lithium iron manganese phosphate particles. During counting the primary particle size, the particles meeting 0<primary particle size≤10nm are not included in the counting range.

In some embodiments, the manganese dissolution amount of the secondary battery is ≤48ppm. In some embodiments, the manganese dissolution amount of the secondary battery is ≤45ppm. In some embodiments, the manganese dissolution amount of the secondary battery is ≤40ppm. In some embodiments, the manganese dissolution amount of the secondary battery is ≤38ppm. In some embodiments, the manganese dissolution amount of the secondary battery is ≤37ppm. In some embodiments, the manganese dissolution amount of the secondary battery is ≤35ppm. In some embodiments, the manganese dissolution amount of the secondary battery is ≤33ppm. In some embodiments, the manganese dissolution amount of the secondary battery is ≤31ppm. In some embodiments, the manganese dissolution amount of the secondary battery is ≤30ppm. In some embodiments, the manganese dissolution amount of the secondary battery is ≤28ppm. In some embodiments, the manganese dissolution amount of the secondary battery is ≤25ppm. In some embodiments, the manganese dissolution amount of the secondary battery is ≤24ppm. In some embodiments, the manganese dissolution amount of the secondary battery is ≤20ppm. In some embodiments, the manganese dissolution amount of the secondary battery is ≤18ppm. In some embodiments, the manganese dissolution amount of the secondary battery is ≤17ppm. In some embodiments, the manganese dissolution amount of the secondary battery is ≤16ppm. In some embodiments, the manganese dissolution amount of the secondary battery is ≤15ppm. In some embodiments, the manganese dissolution amount of the secondary battery is ≤14ppm. In some embodiments, the manganese dissolution amount of the secondary battery is ≤12ppm.

In some embodiments, the manganese dissolution amount refers to the manganese dissolution amount after 100 cycles at 25°C.

The manganese dissolution amount can be measured using methods and devices known in the art. For example, it can be measured with reference to ICP testing processes: a fully-charged cell after 100 cycles at 25°C is collected and disassembled in a glove box, the positive electrode plate is taken out in a drying room, and then 1 g of materials is gently scrapped off from a center of the electrode plate with a ceramic knife, it is ensured that the entire active substance layer is scraped off to avoid different manganese content at different thicknesses, and the material is sealed in a ziplock bag and delivered to a laboratory. An electronic scale, a heating plate, a 150ml quartz beaker, watch glass, a funnel, a 100ml volumetric flask, pliers (heat-resistant gloves), a weighing spoon, a lint-free paper, and the like are prepared; whether the calibration date of the electronic scale is valid is checked, expired scales cannot be used and must be recalibrated; a power supply is connected, and the heating plate can be normally heated to 250°C; 0.2000±0.005 g of powder is weighed and placed into the beaker; acidification: a dilute sulfuric acid solution with a volume ratio of 1:4 (concentrated sulfuric acid: ultrapure water = 1:4) is prepared; 20 ml of the prepared dilute sulfuric acid solution is added to the beaker; the heating plate is preheated to 250°C, then the sample is placed in the beaker to be digested for 30 min; a quartz cap is placed over an opening of the beaker to reduce acid evaporation; after 30 min of digestion, the sample is taken out and cooled to room temperature; the completely digested sample is transferred to the 100ml glass volumetric flask and filled to mark; then, subsequent operation is carried out according to ICP standard test processes: the test device temperature is 22±2°C and the humidity is <60%; a trace element method is selected to test; calibration standard: a standard curve is determined using the prepared standard solution; the element selected is Mn; and finally, the Mn dissolution amount can be obtained by testing.

In some embodiments, the positive electrode film layer further includes second particles, the second particles including first lithium iron phosphate particles and/or second lithium iron manganese phosphate particles, a primary average particle size s2 of the second particles meeting 500nm≤s2≤3000nm, and a Mn/Fe molar ratio of the second lithium iron manganese phosphate particles being ≤1.5.

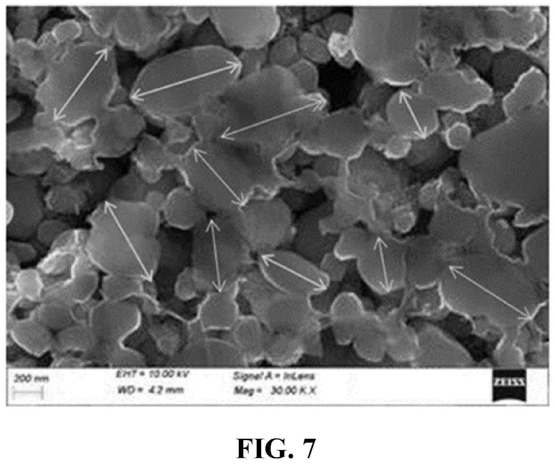

In a specific embodiment, as shown in the scanning electron microscope pictures of the first lithium iron phosphate particles in FIG. 7, the line segment marked by a double arrow in the particles is the primary particle size defined in the present application.

In some embodiments, the second particles are the primary particles.

The "primary particles" here refer to powder particles that do not have obvious agglomeration interfaces in the particle scanning electron microscope pictures, but may have tiny pores and point or line defects, which are different from the smallest unit of powder particles that do not have structures such as stacking and flocculation.

The primary average particle size of the second particles can be measured using methods and devices known in the art. For example, it can be tested using a scanning electron microscope and an aspect ratio statistical method. As an example, the positive electrode plate is cut via the argon ion beam perpendicular to the large surface to expose the cross section, and the cross section is photographed via the scanning electron microscope; the particle size of the second particles is statistically analyzed using the aspect ratio statistical method; specifically, the total number of the second particles with the primary particle size greater than 80 nm and a sum of the primary particle size of the second particles with the primary particle size greater than 80 nm can be counted in pictures from the scanning electron microscope, primary average particle size of second particles = total primary particle size of second particles/ total number of second particles. During counting the primary particle size, the particles meeting 0<primary particle size≤80nm are not included in the counting range.

The primary average particle size of the second particles is 500-3,000 nm, such that the particles can maintain a suitable micron-level size, thus avoiding interfacial side reactions and processing difficulties caused by nano-sizing of the particles, as well as preventing the degrading of the kinetic performance due to excessively large size of the particles; in addition, it facilitates the stirring of a slurry containing the second particles and increases the solid content, thereby improving the cell processing and increasing the volumetric energy density of the battery; and furthermore, it avoids the impact of excessive carbon coating density on normal de-intercalation and intercalation of the lithium ions, which would otherwise affect the cell capacity.

If the positive electrode film layer also includes the second particles, the second particles including the first lithium iron phosphate particles and/or second lithium iron manganese phosphate particles, the primary average particle size s2 of the second particles meeting 500nm≤s2≤3000nm, and the Mn/Fe molar ratio of the second lithium iron manganese phosphate particles being ≤1.5, some larger second particles are mixed into the lithium iron manganese phosphate material to achieve close packing; moreover, since the large particle component is lithium iron phosphate or lithium iron manganese phosphate with low Mn/Fe molar ratio, the material has high kinetic performance compared with the large-particle lithium iron manganese phosphate with high Mn/Fe molar ratio; furthermore, after the second particles crack during cycling, since the particles do not contain manganese or have low manganese content, the problems of electrolyte solution oxidation caused by the oxidation of the material and damage to a negative electrode SEI film caused by manganese dissolution can be alleviated; and therefore, the secondary battery in the present application has low manganese dissolution amount, good high-temperature storage performance, and good high-temperature cycling performance.

In some embodiments, the primary average particle size of the second particles can be 250 nm, 300 nm, 350 nm, 400 nm, 440 nm, 500 nm, 550 nm, 600 nm, 650 nm, 700 nm, 730 nm, 750 nm, 780 nm, 800 nm, 830 nm, 850 nm, 870 nm, 900 nm, 950 nm, 1,000 nm, 1,100 nm, 1,200 nm, 1,300 nm, 1,400 nm, 1,500 nm, 2,000 nm, 2,100 nm, 2,200 nm, 2,300 nm, 2,400 nm, 2,500 nm, 2,600 nm, 2,700 nm, 2,800 nm, 2,900 nm, 3,000 nm, 3,500 nm, 4,000 nm, or a range of any two of the above primary average particle sizes or a value within this range.

In some embodiments, the primary average particle size s2 of the second particles meet 500nm≤s2≤3500nm. In some embodiments, the primary average particle size s2 of the second particles meet 500nm≤s2≤4000nm. In some embodiments, the primary average particle size s2 of the second particles meet 300nm≤s2≤3500nm. In some embodiments, the primary average particle size s2 of the second particles meet 500nm≤s2≤3000nm. In some embodiments, the primary average particle size s2 of the second particles meet 650nm≤s2≤2500nm. In some embodiments, the primary average particle size s2 of the second particles meet 650nm≤s2≤3000nm. In some embodiments, the primary average particle size s2 of the second particles meet 650nm≤s2≤4000nm. In some embodiments, the primary average particle size s2 of the second particles meet 700nm≤s2≤3000nm. In some embodiments, the primary average particle size s2 of the second particles meet 700nm≤s2≤4000nm. In some embodiments, the primary average particle size s2 of the second particles meet 800nm≤s2≤3000nm. In some embodiments, the primary average particle size s2 of the second particles meet 700nm≤s2≤4000nm.

In some embodiments, on the basis of the total area of primary particles in the positive electrode film layer, the area ratio of the first particles is 60%-98%, and the area ratio of the second particles is 2%-40%.

In some embodiments, on the basis of the total area of primary particles in the positive electrode film layer, the area ratio of the first particles is 70%-98%. In some embodiments, the area ratio of the first particles is 65%, 70%, 72%, 74%, 75%, 97%, or 98%.

In some embodiments, on the basis of the total area of primary particles in the positive electrode film layer, the area ratio of the second particles is 2%-30%. In some embodiments, the area ratio of the second particles is 2%, 23%, 25%, 30%, or a range of any two of the above area ratios or a value within this range.

The areas of the first particles and second particles can be obtained by statistical analysis on the cross section pictures of the electrode plate obtained from the scanning electron microscope through Avizo 3D software, and each area is divided by the total area to obtain the corresponding area ratio.

In some embodiments, the second particles do not include the second lithium iron manganese phosphate particles.

In some embodiments, the positive electrode film layer further includes the first lithium iron phosphate particles, a primary average particle size s2' of the first lithium iron phosphate particles meeting 500nm≤s2'≤3000nm.

In some embodiments, the first lithium iron phosphate particles are the primary particles.

The primary average particle size of the first lithium iron phosphate particles is 500-3,000 nm, such that the particles can maintain a suitable micron-level size, thus avoiding interfacial side reactions and processing difficulties caused by nano-sizing of the particles, as well as preventing the degrading of the kinetic performance due to excessively large size of the particles; in addition, it facilitates the stirring of the slurry containing the first lithium iron phosphate particles and increases the solid content, thereby improving the cell processing and increasing the volumetric energy density of the battery; and furthermore, it avoids the impact of excessive carbon coating density on the normal de-intercalation and intercalation of the lithium ions, which would otherwise affect the cell capacity.

If the positive electrode film layer also includes the first lithium iron phosphate particles, the primary average particle size s2' of the first lithium iron phosphate particles meeting 500nm≤s2'≤3,000nm, some large first lithium iron phosphate particles are mixed into the lithium iron manganese phosphate material to achieve close packing; moreover, since the large particle component is lithium iron phosphate, the material has high kinetic performance compared with the large-particle lithium iron manganese phosphate; furthermore, after the first lithium iron phosphate particles crack during cycling, since the particles do not contain manganese, the problems of electrolyte solution oxidation caused by the oxidation of the material and damage to the negative electrode SEI film caused by manganese dissolution can be alleviated; and therefore, the secondary battery in the present application has low manganese dissolution amount, good high-temperature storage performance, good high-temperature cycling performance, and high solid content of the positive electrode slurry.

In some embodiments, the primary average particle size of the first lithium iron phosphate particles can be 250 nm, 300 nm, 350 nm, 400 nm, 440 nm, 500 nm, 550 nm, 600 nm, 650 nm, 700 nm, 730 nm, 750 nm, 780 nm, 800 nm, 830 nm, 850 nm, 870 nm, 900 nm, 950 nm, 1,000 nm, 1,100 nm, 1,200 nm, 1,300 nm, 1,400 nm, 1,500 nm, 2,000 nm, 2,100 nm, 2,200 nm, 2,300 nm, 2,400 nm, 2,500 nm, 2,600 nm, 2,700 nm, 2,800 nm, 2,900 nm, 3,000 nm, 3,500 nm, 4,000 nm, or a range of any two of the above primary average particle sizes or a value within this range.

In some embodiments, the primary average particle size s2' of the first lithium iron phosphate particles meets 500nm≤s2'≤3500nm.

If the primary average particle size s2' of the first lithium iron phosphate particles meets 500nm≤s2'≤3500nm, the secondary battery in the present application has low manganese dissolution amount, good high-temperature storage performance, good high-temperature cycling performance, and high solid content of the positive electrode slurry.

In some embodiments, the primary average particle size s2' of the first lithium iron phosphate particles meets 500nm≤s2'≤4000nm.

If the primary average particle size s2' of the first lithium iron phosphate particles meets 500nm≤s2'≤4000nm, the secondary battery in the present application has low manganese dissolution amount, good high-temperature storage performance, and high solid content of the positive electrode slurry.

In some embodiments, the primary average particle size s2' of the first lithium iron phosphate particles meets 300nm≤s2'≤3500nm. In some embodiments, the primary average particle size s2' of the first lithium iron phosphate particles meets 500nm≤s2'≤3000nm. In some embodiments, the primary average particle size s2' of the first lithium iron phosphate particles meets 650nm≤s2'≤2500nm. In some embodiments, the primary average particle size s2' of the first lithium iron phosphate particles meets 650nm≤s2'≤3000nm. In some embodiments, the primary average particle size s2' of the first lithium iron phosphate particles meets 650nm≤s2'≤4000nm. In some embodiments, the primary average particle size s2' of the first lithium iron phosphate particles meets 700nm≤s2'≤3000nm. In some embodiments, the primary average particle size s2' of the first lithium iron phosphate particles meets 700nm≤s2'≤4000nm. In some embodiments, the primary average particle size s2' of the first lithium iron phosphate particles meets 800nm≤s2'≤3000nm. In some embodiments, the primary average particle size s2' of the first lithium iron phosphate particles meets 800nm≤s2'≤4000nm.

In some embodiments, the first lithium iron phosphate particles are single-crystal particles and/or polycrystalline particles.

In the present application, the term "single crystal" refers to a structurally complete crystal grown from a single crystal nucleus. The single crystal in the present application is a single unit in a picture from a transmission electron microscope, and there are no grain boundaries in the single crystal.

In some embodiments, the single crystal in the present application may have minor defects, such as internal micropores, a small number of points and surfaces, or a small number of particles adhering to each other on the surface of a particle.

In the present application, the term "polycrystalline" refers to a crystal formed by the random orientation of small single-crystal grains, and there are grain boundaries in the polycrystalline.

In some embodiments, on the basis of the total number of the first lithium iron phosphate particles, the number ratio of the single-crystal particles is greater than or equal to 90%. The number ratio of the single-crystal particles is controlled within the above range, and compared with polycrystalline and secondary agglomerates, the single-crystal particles have high ratio, and the grain boundaries have less obstruction to the lithium ions, which is conducive to further improving a transport rate of the lithium ions, and improving the kinetic performance of the secondary battery.

The primary average particle size of the first lithium iron phosphate particles can be measured using methods and devices known in the art. For example, it can be tested using a scanning electron microscope and an aspect ratio statistical method. As an example, the positive electrode plate is cut via the argon ion beam perpendicular to the large surface to expose the cross section, and the cross section is photographed via the scanning electron microscope; the particle size of the first lithium iron manganese phosphate particles is statistically analyzed using the aspect ratio statistical method; specifically, the total number of the first lithium iron phosphate particles with the primary particle size greater than 80 nm and the sum of the primary particle size of the first lithium iron phosphate particles with the primary particle size greater than 80 nm can be counted in pictures from the scanning electron microscope, primary average particle size of first lithium iron phosphate particles = total primary particle size of first lithium iron phosphate particles/ total number of first lithium iron phosphate particles. During counting the primary particle size, the particles meeting 0<primary particle size≤80nm are not included in the counting range.

In some embodiments, on the basis of the total area of primary particles in the positive electrode film layer, the area ratio of the first lithium iron manganese phosphate particles is 70%-98%, and the area ratio of the first lithium iron phosphate particles is 2%-30%.

In some embodiments, on the basis of the total area of primary particles in the positive electrode film layer, the area ratio of the lithium iron manganese phosphate particles is 70%-98%. In some embodiments, the area ratio of the lithium iron manganese phosphate particles is 65%, 70%, 72%, 74%, 75%, 97%, or 98%.

In some embodiments, on the basis of the total area of primary particles in the positive electrode film layer, the area ratio of the first lithium iron phosphate particles is 2-30%. In some embodiments, the area ratio of the first lithium iron phosphate particles is 2%, 23%, 25%, 30%, or a range of any two of the above area ratios or a value within this range.

The areas of the first lithium iron phosphate particles and second lithium iron phosphate particles can be obtained by statistical analysis on the cross section pictures of the electrode plate obtained from the scanning electron microscope through Avizo 3D software, and each area is divided by the total area to obtain the corresponding area ratio.

In some embodiments, the second particles do not include the first lithium iron phosphate particles.

In some embodiments, the positive electrode film layer further includes the second lithium iron manganese phosphate particles, the primary average particle size s2" of the second lithium iron manganese phosphate particles meeting 500nm≤s2"≤3000nm.

In some embodiments, the second lithium iron manganese phosphate particles are the primary particles.

The primary average particle size of the second lithium iron manganese phosphate particles is 500-3,000 nm, such that the particles can maintain a suitable micron-level size, thus avoiding interfacial side reactions and processing difficulties caused by nano-sizing of the particles, as well as preventing the degrading of the kinetic performance due to excessively large size of the particles; in addition, it facilitates the stirring of a slurry containing the second lithium iron manganese phosphate particles and increases the solid content, thereby improving the cell processing and increasing the volumetric energy density of the battery; and furthermore, it avoids the impact of excessive carbon coating density on the normal de-intercalation and intercalation of the lithium ions, which would otherwise affect the cell capacity.

If the positive electrode film layer also includes the second lithium iron manganese phosphate particles, the primary average particle size s2'' of the second lithium iron manganese phosphate particle meeting 500nm≤s2''≤3000nm, some large second lithium iron manganese phosphate particles are mixed into the lithium iron manganese phosphate material to achieve close packing; moreover, since the large particle component is lithium iron manganese phosphate with low Mn/Fe molar ratio, the material has high kinetic performance compared with the large-particle lithium iron manganese phosphate with high Mn/Fe molar ratio; furthermore, after the large second lithium iron manganese phosphate particles crack during cycling, since the particles have low manganese content, the problems of electrolyte solution oxidation caused by the oxidation of the material and damage to the negative electrode SEI film caused by manganese dissolution can be alleviated; and therefore, the secondary battery in the present application has low manganese dissolution amount, good high-temperature storage performance, and good high-temperature cycling performance.

In some embodiments, the primary average particle size of the second lithium iron manganese phosphate particles can be 250 nm, 300 nm, 350 nm, 400 nm, 440 nm, 500 nm, 550 nm, 600 nm, 650 nm, 700 nm, 730 nm, 750 nm, 780 nm, 800 nm, 830 nm, 850 nm, 870 nm, 900 nm, 950 nm, 1,000 nm, 1,100 nm, 1,200 nm, 1,300 nm, 1,400 nm, 1,500 nm, 2,000 nm, 2,100 nm, 2,200 nm, 2,300 nm, 2,400 nm, 2,500 nm, 2,600 nm, 2,700 nm, 2,800 nm, 2,900 nm, 3,000 nm, 3,500 nm, 4,000 nm, or a range of any two of the above primary average particle sizes or a value within this range.

In some embodiments, the primary average particle size s2" of the second lithium iron manganese phosphate particles meets 500nm≤s2"≤3500nm. In some embodiments, the primary average particle size s2" of the second lithium iron manganese phosphate particles meets 500nm≤s2"≤4000nm. In some embodiments, the primary average particle size s2" of the second lithium iron manganese phosphate particles meets 300nm≤s2"≤3500nm. In some embodiments, the primary average particle size s2" of the second lithium iron manganese phosphate particles meets 500nm≤s2"≤3000nm. In some embodiments, the primary average particle size s2" of the second lithium iron manganese phosphate particles meets 650nm≤s2"≤2500nm. In some embodiments, the primary average particle size s2" of the second lithium iron manganese phosphate particles meets 650nm≤s2"≤3000nm. In some embodiments, the primary average particle size s2" of the second lithium iron manganese phosphate particles meets 650nm≤s2"≤4000nm. In some embodiments, the primary average particle size s2" of the second lithium iron manganese phosphate particles meets 700nm≤s2"≤3000nm. In some embodiments, the primary average particle size s2" of the second lithium iron manganese phosphate particles meets 700nm≤s2"≤4000nm. In some embodiments, the primary average particle size s2" of the second lithium iron manganese phosphate particles meets 800nm≤s2"≤3000nm. In some embodiments, the primary average particle size s2" of the second lithium iron manganese phosphate particles meets 700nm≤s2"≤4000nm.

In some embodiments, the second lithium iron manganese phosphate particles are the single-crystal particles and/or polycrystalline particles.

In some embodiments, on the basis of the total number of the second lithium iron manganese phosphate particles, the number ratio of the single-crystal particles is greater than or equal to 90%. The number ratio of the single-crystal particles is controlled within the above range, and compared with polycrystalline and secondary agglomerates, the single-crystal particles have high ratio, and the grain boundaries have less obstruction to the lithium ions, which is conducive to further improving a transport rate of the lithium ions, and improving the kinetic performance of the secondary battery.

The primary average particle size of the second lithium iron manganese phosphate particles can be measured using methods and devices known in the art. For example, it can be tested using a scanning electron microscope and an aspect ratio statistical method. As an example, the positive electrode plate is cut via the argon ion beam perpendicular to the large surface to expose the cross section, and the cross section is photographed via the scanning electron microscope; the particle size of the second lithium iron manganese phosphate particles is statistically analyzed using the aspect ratio statistical method; specifically, the total number of the second lithium iron manganese phosphate particles with the primary particle size greater than 80 nm and the sum of the primary particle size of the second lithium iron manganese phosphate particles with the primary particle size greater than 80 nm can be counted in pictures from the scanning electron microscope, primary average particle size of second lithium iron manganese phosphate particles = total primary particle size of second lithium iron manganese phosphate particles/ total number of second lithium iron manganese phosphate particles. During counting the primary particle size, the particles meeting 0<primary particle size≤80nm are not included in the counting range.

In some embodiments, on the basis of the total area of primary particles in the positive electrode film layer, the area ratio of the first lithium iron manganese phosphate particles is 70%-98%, and the area ratio of the second lithium iron manganese phosphate particles is 2%-30%.

In some embodiments, on the basis of the total area of primary particles in the positive electrode film layer, the area ratio of the lithium iron manganese phosphate particles is 70%-98%. In some embodiments, the area ratio of the lithium iron manganese phosphate particles is 65%, 70%, 72%, 74%, 75%, 97%, or 98%.

In some embodiments, on the basis of the total area of primary particles in the positive electrode film layer, the area ratio of the second lithium iron manganese phosphate particles is 2%-30%. In some embodiments, the area ratio of the second lithium iron manganese phosphate particles is 2%, 23%, 25%, 30%, or a range of any two of the above area ratios or a value within this range.

The areas of the first lithium iron manganese phosphate particles and second lithium iron manganese phosphate particles can be obtained by statistical analysis on the cross section pictures of the electrode plate obtained from the scanning electron microscope through Avizo 3D software, and each area is divided by the total area to obtain the corresponding area ratio.

In some embodiments, the positive electrode film layer further includes third particles, the third particles including the second lithium iron phosphate particles and/or third lithium iron manganese phosphate particles, a primary average particle size s3 of the third particles meeting 30nm≤s3≤200nm, and the Mn/Fe molar ratio of the third lithium iron manganese phosphate particles being ≤1.5.

A small amount of ultrafine particles is added to the positive electrode film layer, thus the space utilization rate can be further improved; the ultrafine particles can be adjusted into gaps between the medium-sized first lithium iron manganese phosphate particles and ultra-large first lithium iron phosphate particles/ second lithium iron manganese phosphate particles, thereby further improving the volumetric energy density, that is, further improving the compacted density of the electrode plate. Compared with ultrafine lithium iron manganese phosphate with high Mn/Fe molar ratio, ultrafine lithium iron phosphate or lithium iron manganese phosphate with low Mn/Fe molar ratio the experiences some loss on the voltage platform, but its gram capacity and surface stability are greatly improved, especially the surface stability; and it is difficult for the ultrafine lithium iron manganese phosphate material with high Mn/Fe molar ratio to form good coating; and during charging, the surface shows high oxidizing property; furthermore, due to the Jahn-Teller effect as well as the high specific surface energy of small particles, manganese dissolution is exacerbated, resulting in a decrease in the cycle life of the battery. According to the secondary battery in the present application, by means of controlling the first lithium iron manganese phosphate particles to have a moderate particle size and containing fewer ultrafine powders and ultra-large particles, the material shows long cycle life and high gram capacity. Furthermore, according to the secondary battery in the present application, by means of adding large-particle lithium iron phosphate/ lithium iron manganese phosphate with low Mn/Fe molar ratio and small-particle lithium iron phosphate/ lithium iron manganese phosphate material with low Mn/Fe molar ratio to the positive electrode film layer, high compacted density is ensured. For the positive electrode active material, by deducing with an idealized dense packing model, the results show that in order to achieve high compacted density, there must be some large particles and ultrafine powder in the material to achieve close packing, thus achieving high compacted density of the positive electrode plate while also maintaining good high-temperature cycling performance.

In some embodiments, the positive electrode film layer further includes the second lithium iron phosphate particles, the primary average particle size s3' of the second lithium iron phosphate particles meeting 30nm≤s3'≤100nm.

In some embodiments, the positive electrode film layer further includes the second lithium iron phosphate particles, and the primary average particle size of the second lithium iron phosphate particles can be 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, or a range of any two of the above primary average particle sizes or a value within this range.

The primary average particle size of the third particles can be measured using methods and devices known in the art. For example, it can be tested using a scanning electron microscope and an aspect ratio statistical method. As an example, the positive electrode plate is cut via the argon ion beam perpendicular to the large surface to expose the cross section, and the cross section is photographed via the scanning electron microscope; the particle size of the third particles is statistically analyzed using the aspect ratio statistical method; specifically, the total number of the third particles with the primary particle size greater than 10 nm and a sum of the primary particle size of the third particles with the primary particle size greater than 10 nm can be counted in pictures from the scanning electron microscope, primary average particle size of third particles = total primary particle size of third particles/ total number of third particles. During counting the primary particle size, the particles meeting 0<primary particle size≤10nm are not included in the counting range.

In some embodiments, on the basis of the total area of primary particles in the positive electrode film layer, the area ratio of the first particles is 70%-97%; the area ratio of the second particles is 2%-25%; and the area ratio of the third particles is 1%-10%.

In some embodiments, on the basis of the total area of primary particles in the positive electrode film layer, the area ratio of the first particles is 70%-97%. In some embodiments, on the basis of the total area of primary particles in the positive electrode film layer, the area ratio of the first particles is 65%, 70%, 72%, 74%, 75%, 97%, or 98%. In some embodiments, on the basis of the total area of primary particles in the positive electrode film layer, the area ratio of the first particles is 65%-74%.

In some embodiments, on the basis of the total area of primary particles in the positive electrode film layer, the area ratio of the second particles is 2%-25%. In some embodiments, on the basis of the total area of primary particles in the positive electrode film layer, the area ratio of the second particles is 2%, 23%, 25%, 30%, or a range of any two of the above area ratios or a value within this range. In some embodiments, on the basis of the total area of primary particles in the positive electrode film layer, the area ratio of the second particles is 23-25%.

In some embodiments, on the basis of the total area of primary particles in the positive electrode film layer, the area ratio of the third particles is 1%-10%. In some embodiments, on the basis of the total area of primary particles in the positive electrode film layer, the area ratio of the third particles is 1%, 3%, 5%, 10%, or a range of any two of the above area ratios or a value within this range.

The areas of the first particles, second particles, and third particles can be obtained by statistical analysis on the cross section pictures of the electrode plate obtained from the scanning electron microscope through Avizo 3D software, and each area is divided by the total area to obtain the corresponding area ratio.

In some embodiments, the third particles do not include the third lithium iron manganese phosphate particles.

In some embodiments, the positive electrode film layer further includes the second lithium iron phosphate particles, the primary average particle size s3' of the second lithium iron phosphate particles meeting 30nm≤s3≤200nm.

A small amount of ultrafine particles is added to the positive electrode film layer, thus the space utilization rate can be further improved; the ultrafine particles can be adjusted into gaps between medium-sized lithium iron manganese phosphate particles and ultra-large lithium iron manganese phosphate particles, thereby further improving the volumetric energy density, that is, further improving the compacted density of the electrode plate. Compared with ultrafine lithium iron manganese phosphate, the ultrafine lithium iron phosphate experiences some loss on the voltage platform, but its volume capacity and surface stability are greatly improved, especially the surface stability; and it is difficult for the ultrafine lithium iron manganese phosphate material with high Mn/Fe molar ratio to form good coating; during charging, the surface shows high oxidizing property; furthermore, due to the Jahn-Teller effect as well as the high specific surface energy of small particles, manganese dissolution is exacerbated, resulting in a decrease in the cycle life of the battery. According to the secondary battery in the present application, by means of controlling the lithium iron manganese phosphate particles to have a moderate particle size and containing fewer ultrafine powder and ultra-large particles, the material has long cycle life and high gram capacity. Furthermore, according to the secondary battery in the present application, by means of adding large-particle lithium iron phosphate and small-particle lithium iron phosphate material to the positive electrode film layer, high compacted density is ensured. For the positive electrode active material, by deducing with an idealized dense packing model, the results show that in order to achieve high compacted density, there must be some large particles and ultrafine powder in the material to achieve close packing, thus achieving high compacted density of the positive electrode plate while also maintaining good high-temperature cycling performance. If the positive electrode film layer also includes the second lithium iron phosphate particles, the primary average particle size s3' of the second lithium iron phosphate particles meeting 30nm≤s3'≤200nm, the secondary battery in the present application has low manganese dissolution amount, good high-temperature storage performance, and good high-temperature cycling performance.

In some embodiments, the positive electrode film layer further includes the second lithium iron phosphate particles, the primary average particle size s3' of the second lithium iron phosphate particles meeting 30nm≤s3'≤100nm.

In some embodiments, the positive electrode film layer further includes the second lithium iron phosphate particles, and the primary average particle size of the second lithium iron phosphate particles can be 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, or a range of any two of the above primary average particle sizes or a value within this range.

The primary average particle size of the second lithium iron phosphate particles can be measured using methods and devices known in the art. For example, it can be tested using a scanning electron microscope and an aspect ratio statistical method. As an example, the positive electrode plate is cut via the argon ion beam perpendicular to the large surface to expose the cross section, and the cross section is photographed via the scanning electron microscope; the particle size of the second lithium iron manganese phosphate particles is statistically analyzed using the aspect ratio statistical method; specifically, the total number of the second lithium iron phosphate particles with the primary particle size greater than 10 nm and the sum of the primary particle size of the second lithium iron phosphate particles with the primary particle size greater than 10 nm can be counted in pictures from the scanning electron microscope, primary average particle size of second lithium iron phosphate particles = total primary particle size of second lithium iron phosphate particles/ total number of second lithium iron phosphate particles. During counting the primary particle size, the particles meeting 0<primary particle size≤10nm are not included in the counting range.

In some embodiments, on the basis of the total area of primary particles in the positive electrode film layer, the area ratio of the first lithium iron manganese phosphate particles is 70%-97%; the area ratio of the first lithium iron phosphate particles is 2%-25%; and the area ratio of the second lithium iron phosphate particles is 1%-10%.

In some embodiments, on the basis of the total area of primary particles in the positive electrode film layer, the area ratio of the first lithium iron manganese phosphate particles is 70%-97%. In some embodiments, on the basis of the total area of primary particles in the positive electrode film layer, the area ratio of the first lithium iron manganese phosphate particles is 65%, 70%, 72%, 74%, 75%, 97%, or 98%. In some embodiments, on the basis of the total area of primary particles in the positive electrode film layer, the area ratio of the first lithium iron manganese phosphate particles is 65%-74%.

In some embodiments, on the basis of the total area of primary particles in the positive electrode film layer, the area ratio of the first lithium iron phosphate particles is 2%-25%. In some embodiments, on the basis of the total area of primary particles in the positive electrode film layer, the area ratio of the first lithium iron phosphate particles is 2%, 23%, 25%, 30%, or a range of any two of the above area ratios or a value within this range. In some embodiments, on the basis of the total area of primary particles in the positive electrode film layer, the area ratio of the first lithium iron phosphate particles is 23-25%.

In some embodiments, on the basis of the total area of primary particles in the positive electrode film layer, the area ratio of the second lithium iron phosphate particles is 1%-10%. In some embodiments, on the basis of the total area of primary particles in the positive electrode film layer, the area ratio of the second lithium iron phosphate particles is 1%, 3%, 5%, 10%, or a range of any two of the above area ratios or a value within this range.

The areas of the first lithium iron manganese phosphate particles, first lithium iron phosphate particles, and second lithium iron phosphate particles can be obtained by statistical analysis on the cross section pictures of the electrode plate obtained from the scanning electron microscope through Avizo 3D software, and each area is divided by the total area to obtain the corresponding area ratio.

In some embodiments, the third particles do not include the second lithium iron phosphate particles.

In some embodiments, the positive electrode film layer further includes the third lithium iron manganese phosphate particles, the primary average particle size s3" of the third lithium iron manganese phosphate particles meeting 30nm≤s3"≤200nm.

A small amount of ultrafine particles is added to the positive electrode film layer, thus the space utilization rate can be further improved; the ultrafine particles can be adjusted into gaps between the medium-sized first lithium iron manganese phosphate particles and ultra-large first lithium iron phosphate particles/ second lithium iron manganese phosphate particles, thereby further improving the volumetric energy density, that is, further improving the compacted density of the electrode plate. Compared with ultrafine lithium iron manganese phosphate with high Mn/Fe molar ratio, the ultrafine lithium iron manganese phosphate with low Mn/Fe molar ratio experiences some loss on the voltage platform, but its gram capacity and surface stability are greatly improved, especially the surface stability; and it is difficult for the ultrafine lithium iron manganese phosphate material with high Mn/Fe molar ratio to form good coating; and during charging, the surface shows high oxidizing property; furthermore, due to the Jahn-Teller effect as well as the high specific surface energy of small particles, manganese dissolution is exacerbated, resulting in a decrease in the cycle life of the battery. According to the secondary battery in the present application, by means of controlling the first lithium iron manganese phosphate particles to have a moderate particle size and containing fewer ultrafine powders and ultra-large particles, the material shows long cycle life and high gram capacity. Furthermore, according to the secondary battery in the present application, by means of adding large-particle lithium iron phosphate/ lithium iron manganese phosphate with low Mn/Fe molar ratio and small-particle lithium iron manganese phosphate material with low Mn/Fe molar ratio to the positive electrode, high compacted density is ensured. For the positive electrode active material, by deducing with an idealized dense packing model, the results show that in order to achieve high compacted density, there must be some large particles and ultrafine powder in the material to achieve close packing, thus achieving high compacted density of the positive electrode plate while also maintaining good high-temperature cycling performance.

In some embodiments, the positive electrode film layer further includes the third lithium iron manganese phosphate particles, the primary average particle size s3" of the third lithium iron manganese phosphate particles meeting 30nm≤s3"≤100nm.

In some embodiments, the positive electrode film layer further includes the third lithium iron manganese phosphate particles, and the primary average particle size of the third lithium iron manganese phosphate particles can be 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, or a range of any two of the above primary average particle sizes or a value within this range.

The primary average particle size of the third lithium iron manganese phosphate particles can be measured using methods and devices known in the art. For example, it can be tested using a scanning electron microscope and an aspect ratio statistical method. As an example, the positive electrode plate is cut via the argon ion beam perpendicular to the large surface to expose the cross section, and the cross section is photographed via the scanning electron microscope; the particle size of the third lithium iron manganese phosphate particles is statistically analyzed using the aspect ratio statistical method; specifically, the total number of the third lithium iron manganese phosphate particles with the primary particle size greater than 10 nm and the sum of the primary particle size of the third lithium iron manganese phosphate particles with the primary particle size greater than 10 nm can be counted in pictures from the scanning electron microscope, primary average particle size of third lithium iron manganese phosphate particles = total primary particle size of third lithium iron manganese phosphate particles/ total number of third lithium iron manganese phosphate particles. During counting the primary particle size, the particles meeting 0<primary particle size≤10nm are not included in the counting range.

In some embodiments, on the basis of the total area of primary particles in the positive electrode film layer, the area ratio of the first lithium iron manganese phosphate particles is 70%-97%; the area ratio of the second lithium iron manganese phosphate particles is 2%-25%; and the area ratio of the third lithium iron manganese phosphate particles is 1%-10%.

In some embodiments, on the basis of the total area of primary particles in the positive electrode film layer, the area ratio of the first lithium iron manganese phosphate particles is 70%-97%. In some embodiments, on the basis of the total area of primary particles in the positive electrode film layer, the area ratio of the first lithium iron manganese phosphate particles is 65%, 70%, 72%, 74%, 75%, 97%, or 98%. In some embodiments, on the basis of the total area of primary particles in the positive electrode film layer, the area ratio of the first lithium iron manganese phosphate particles is 65%-74%.

In some embodiments, on the basis of the total area of primary particles in the positive electrode film layer, the area ratio of the second lithium iron manganese phosphate particles is 2%-25%. In some embodiments, on the basis of the total area of primary particles in the positive electrode film layer, the area ratio of the second lithium iron manganese phosphate particles is 2%, 23%, 25%, 30%, or a range of any two of the above area ratios or a value within this range. In some embodiments, on the basis of the total area of primary particles in the positive electrode film layer, the area ratio of the second lithium iron manganese phosphate particles is 23%-25%.

In some embodiments, on the basis of the total area of primary particles in the positive electrode film layer, the area ratio of the third lithium iron manganese phosphate particles is 1%-10%. In some embodiments, on the basis of the total area of primary particles in the positive electrode film layer, the area ratio of the third lithium iron manganese phosphate particles is 1%, 3%, 5%, 10%, or a range of any two of the above area ratios or a value within this range.

The areas of the first lithium iron manganese phosphate particles, second lithium iron manganese phosphate particles, and third lithium iron manganese phosphate particles can be obtained by statistical analysis on the cross section pictures of the electrode plate obtained from the scanning electron microscope through Avizo 3D software, and each area is divided by the total area to obtain the corresponding area ratio.

In some embodiments, the first lithium iron manganese phosphate particles have a molecular formula of Liₘ₁Feₓ₁Mnᵣ₁P_{y1}Oⱼ₁Q1_{q1}, in which, Q1 includes at least one selected from the group consisting of Al, Na, K, Mg, Cu, Cr, Zn, Pb, Ca, Co, Ni, Sr, Nb, V, Ti, B, S, Si, N, F, Cl, Br, 0.95≤m1≤1.15, x1>0, r1>0, 0.9≤x1+r1≤1, 0.95≤y1≤1, 3.5≤j1≤4, 0≤q1≤0.1, and/or
the second lithium iron manganese phosphate particles have the molecular formula of Liₘ₂Feₓ₂Mnᵣ₂P_{y2}Oⱼ₂Q2_{q2}, in which, Q2 includes at least one selected from the group consisting of Al, Na, K, Mg, Cu, Cr, Zn, Pb, Ca, Co, Ni, Sr, Nb, V, Ti, B, S, Si, N, F, Cl, and Br, 0.95≤m2≤1.15, x2>0, r2>0, r2/x2≤1.5; 0.9≤x2+r2≤1, 0.95≤y2≤1, 3.5≤j2≤4, 0≤q2≤0.1, and/or
the third lithium iron manganese phosphate particles have the molecular formula of Liₘ₃Feₓ₃Mnᵣ₃P_{y3}Oⱼ₃Q3_{q3}, in which, Q3 includes at least one selected from the group consisting of Al, Na, K, Mg, Cu, Cr, Zn, Pb, Ca, Co, Ni, Sr, Nb, V, Ti, B, S, Si, N, F, Cl, and Br, 0.95≤m3≤1.15, x3>0, r3>0, r3/x3≤1.5; 0.9≤x3+r3≤1, 0.95≤y3≤1, 3.5≤j3≤4, 0≤q3≤0.1, and/or
the first lithium iron phosphate particles have the molecular formula of Liₘ₄Feₓ₄P_{y4}Oⱼ₄Q4_{q4}, in which, Q4 includes at least one selected from the group consisting of Al, Na, K, Mg, Cu, Mn, Cr, Zn, Pb, Ca, Co, Ni, Sr, Nb, V, Ti, B, S, Si, N, F, Cl, and Br, 0.95≤m4≤1.15, 0.9≤x4≤1, 0.95≤y4≤1, 3.5≤j4≤4, 0<q4≤0.1, and/or
the second lithium iron phosphate particles have the molecular formula of Liₘ₅Feₓ₅P_{y5}Oⱼ₅Q2_{q5}, in which, Q5 includes at least one selected from the group consisting of Al, Na, K, Mg, Cu, Mn, Cr, Zn, Pb, Ca, Co, Ni, Sr, Nb, V, Ti, B, S, Si, N, F, Cl, and Br, 0.95≤m5≤1.15, 0.9≤x5≤1, 0.95≤y5≤1, 3.5≤j5≤4, and 0≤q5≤0.1.

In some embodiments, the first lithium iron manganese phosphate particles have the molecular formula of Liₘ₁Feₓ₁Mnᵣ₁P_{y1}Oⱼ₁Q1_{q1}, in which, m1 can be 0.95, 0.98, 1.00, 1.03, 1.05, 1.08, 1.10, 1.13, or 1.15; x1+r1 can be 0.9 or 1.0; y1 can be 0.95, 0.98, or 1.00; j1 can be 3.5, 3.6, 3.7, 3.8, 3.9, or 4; and q1 can be 0, 0.01, 0.02, 0.03, 0.04, 0.05, 0.06, 0.07, 0.08, 0.09, or 0.1. In some embodiments, r1/x1 ≥ 1.5.

In some embodiments, the second lithium iron manganese phosphate particles have the molecular formula of Liₘ₂Feₓ₂Mnᵣ₂P_{y2}Oⱼ₂Q2_{q2}, in which, m2 can be 0.95, 0.98, 1.00, 1.03, 1.05, 1.08, 1.10, 1.13, or 1.15; x2+r2 can be 0.9 or 1.0; y2 can be 0.95, 0.98, or 1.00; j2 can be 3.5, 3.6, 3.7, 3.8, 3.9, or 4; and q2 can be 0, 0.01, 0.02, 0.03, 0.04, 0.05, 0.06, 0.07, 0.08, 0.09, or 0.1. In some embodiments, r2/x2≤ 1.5. In some embodiments, 0≤ r2/x2≤ 1.5. In some embodiments, 0.43≤r2/x2≤1.5.

If the Mn/Fe molar ratio of the second lithium iron manganese phosphate particles is ≤1.5 (namely, r2/x2≤1.5), the secondary battery in the present application has low manganese dissolution amount, good high-temperature storage performance, good high-temperature cycling performance, and high gram capacity.

In some embodiments, the third lithium iron manganese phosphate particles have the molecular formula of Liₘ₃Feₓ₃Mnᵣ₃P_{y3}Oⱼ₃Q3_{q3}, in which, m3 can be 0.95, 0.98, 1.00, 1.03, 1.05, 1.08, 1.10, 1.13, or 1.15; x3+r3 can be 0.9 or 1.0; y3 can be 0.95, 0.98, or 1.00; j3 can be 3.5, 3.6, 3.7, 3.8, 3.9, or 4; and q3 can be 0, 0.01, 0.02, 0.03, 0.04, 0.05, 0.06, 0.07, 0.08, 0.09, or 0.1. In some embodiments, r3/x3≤ 1.5. In some embodiments, 0≤ r3/x3≤ 1.5. In some embodiments, 0.43≤r3/x3≤1.5.

If the Mn/Fe molar ratio of the third lithium iron manganese phosphate particles is ≤1.5 (namely, r3/x3≤1.5), the secondary battery in the present application has low manganese dissolution amount, good high-temperature storage performance, good high-temperature cycling performance, high gram capacity, high solid content of positive electrode slurry, and high compacted density of the positive electrode plate.

In some embodiments, the first lithium iron phosphate particles have the molecular formula of Liₘ₄Feₓ₄P_{y4}Oⱼ₄Q4_{q4}, in which, m4 can be 0.95, 0.98, 1.00, 1.03, 1.05, 1.08, 1.10, 1.13, or 1.15; x4 can be 0.9 or 1.0; y4 can be 0.95, 0.98, 1.00, 1.03, 1.05, 1.08, 1.10, 1.13, or 1.15; j4 can be 3.5, 3.6, 3.7, 3.8, 3.9, or 4; and q4 can be 0, 0.01, 0.02, 0.03, 0.04, 0.05, 0.06, 0.07, 0.08, 0.09, or 0.1.

In some embodiments, the second lithium iron phosphate particles have the molecular formula of Liₘ₅Feₓ₅P_{y5}Oⱼ₅Q2_{q5}, in which, m5 can be 0.95, 0.98, 1.00, 1.03, 1.05, 1.08, 1.10, 1.13, or 1.15; x5 can be 0.9 or 1.0; y5 can be 0.95, 0.98, 1.00, 1.03, 1.05, 1.08, 1.10, 1.13, or 1.15; j5 can be 3.5, 3.6, 3.7, 3.8, 3.9, or 4; and q5 can be 0, 0.01, 0.02, 0.03, 0.04, 0.05, 0.06, 0.07, 0.08, 0.09, or 0.1.

By means of modifying the first lithium iron phosphate particles and/or the second lithium iron phosphate particles with elements Q4 and/or Q5, the ion transport capacity of the positive electrode active material can be improved. The above elements can create vacancies or change the bond lengths between atoms in the particle lattice, such that the lithium ions can conveniently move in the lattice, thereby effectively improving the conductivity of the particles, as well as improving the kinetic performance of the positive electrode active material. In the present application, the modification can specifically be implemented by doping and/or coating.

In some embodiments, Q4 in the first lithium iron phosphate particles includes at least one selected from the group consisting of Ti, V, Mg, and Nb; and the content of Ti, V, Mg and/or Nb is 1,000-10,000 ppm on the basis of the total weight of the first lithium iron phosphate particles.

In some embodiments, on the basis of the total weight of the first lithium iron phosphate particles, the content of Q4 in the first lithium iron phosphate particles is 1,000 ppm, 2,000 ppm, 2,500 ppm, 3,000 ppm, 3,500 ppm, 4,000 ppm, 4,500 ppm, 5,000 ppm, 5,500 ppm, 6,000 ppm, 6,500 ppm, 7,000 ppm, 7,500 ppm, 8,000 ppm, 8,500 ppm, 9,000 ppm, 9,500 ppm, 10,000 ppm, or a range of any two of the above contents of Q4 or a value within this range.

The content of Q4 in the first lithium iron phosphate particles, for example, the content of Ti, can be measured using methods and devices known in the art. For example, it can be tested with reference to GB/T 33822-2017.

The existing lithium iron phosphate particles generally have low content of modified elements or don not have any modified elements. By means of increasing the content of Q4 in the first lithium iron phosphate particles, the bulk ion transport capacity of the first lithium iron phosphate particles can be further improved, and the kinetic performance is improved. However, as the content of Q4 further increases, the bulk ion transport capacity might not continue to increase, and it may even take the place of lithium ions, affecting the gram capacity. The range of Q4 in the present application is conducive to further achieving high kinetic performance and gram capacity.

In some embodiments, Q4 in the first lithium iron phosphate particles includes Ti, and the content of Ti is 1,000-10,000 ppm on the basis of the total weight of the first lithium iron phosphate particles, optionally 2,500-6,000 ppm.

In some embodiments, Q4 in the first lithium iron phosphate particles includes V, and the content of V is 1,000-10,000 ppm on the basis of the total weight of the first lithium iron phosphate particles, optionally 2,500-6,000 ppm.

In some embodiments, Q4 in the first lithium iron phosphate particles includes Nb, and the content of Nb is 1,000-10,000 ppm on the basis of the total weight of the first lithium iron phosphate particles, optionally 2,500-6,000 ppm.

On the basis of the total weight of the first lithium iron phosphate particles, if the content of Ti in the first lithium iron phosphate particles is 2,500-6,000 ppm, further increasing the content of the element Ti in the first lithium iron phosphate particles is beneficial for further improving the bulk ion transport capacity of the first lithium iron phosphate particles, so that the secondary battery in the present application has good high-temperature storage performance and high gram capacity.

In some embodiments, the specific surface area of the first lithium iron phosphate particles is 3 m²/g-8 m²/g.

In some embodiments, the specific surface area (BET) of the first lithium iron phosphate particles can be 3 m²/g, 3.5 m²/g, 4 m²/g, 4.5 m²/g, 4.6 m²/g, 5 m²/g, 5.5 m²/g, 6 m²/g, 6.5 m²/g, 7 m²/g, 7.5 m²/g, 8 m²/g, 8.5 m²/g, 9 m²/g, 9.5 m²/g, 10 m²/g, 10.5 m²/g, 11 m²/g, 11.5 m²/g, 12 m²/g, or a range of any two of the above BET values or a value within this range.

In the present application, the term "specific surface area" or "BET" refers to the total surface area per unit mass of particles, and in the present application, the BET of the lithium iron phosphate particles is related to factors such as the primary average particle size of the lithium iron phosphate particles, the carbon content, the density of carbon coating, the degree of adhesion between carbon and particles, and the porosity of particles.

The specific surface area (BET) of the particles can be measured using methods and devices known in the art. For example, it can be tested according to a gas adsorption method with reference to GB/T 19587-2017. As an example, the lithium iron phosphate particles are placed in a sample tube and the sample tube is immersed in liquid nitrogen at -196°C; the amount of nitrogen adsorbed on the solid surface under different pressures of 0.05-0.30 is measured; and on the basis of a BET multilayer adsorption theory and its formula, the amount of monolayer adsorption of the sample is calculated, thereby obtaining the specific surface area of the sample.

Excessive BET in the lithium iron phosphate particles will lead to increase in the water absorption capacity of the particles, resulting in influence on the processing performance of the mixed positive electrode slurry. However, if the BET of the lithium iron phosphate particles is too low, the gram capacity will be reduced. Controlling the BET of the first lithium iron phosphate particles within the range of 3 m²/g-8 m²/g is beneficial for further balancing the processing performance of the positive electrode slurry and improving the solid content, thereby improving the cell processing, and further increasing the volumetric energy density of the battery.

If the specific surface area of the first lithium iron phosphate particles is 3 m²/g-8 m²/g, introducing large particles with smaller BET is beneficial for reducing the specific surface energy of the positive electrode active material, slowing down the spontaneous agglomeration and polymerization of the material after dispersion, and reducing the viscosity of the slurry, thereby achieving high solid content. Moreover, as the specific surface area of the positive electrode active material decreases, an active reaction area correspondingly decreases, such that the side reactions of the electrode under high voltage can be reduced; the first lithium iron phosphate particles have low specific surface area, so that the overall water absorption of the material can be reduced; and as the water content decreases, the side reactions of the battery during charging and discharging can be reduced, and therefore, the secondary battery in the present application has low manganese dissolution amount, high solid content in the positive electrode slurry, and high compacted density of the positive electrode plate.

In some embodiments, the specific surface area of the first lithium iron phosphate particles is 3 m²/g-6 m²/g.

If the specific surface area (BET) of the first lithium iron phosphate particles is 3 m²/g-6 m²/g, the secondary battery in the present application has good high-temperature storage performance, good high-temperature cycling performance, and high compacted density of the positive electrode plate.

In some embodiments, on the basis of the total weight of the first lithium iron phosphate particles, the carbon content of the first lithium iron phosphate particles is Cx4 wt%, in which, 0.8≤Cx4≤2.0.

If 0.8≤Cx4≤2.0, by controlling the carbon content of the large-particle lithium iron phosphate within a certain range, the conductivity and coating integrity of the large-particle lithium iron phosphate material can be adjusted; the higher the carbon content, the better the kinetic performance, the better the particle conductivity, and the more complete the coating, which reduces the side reactions on the material surface; however, excessive carbon content will lead to an increase in the specific surface area of the material, resulting in degrading of the cycling performance; high carbon coating will lead to some redundant carbon in a form of free carbon or ineffective coating, resulting in degrading of the processing performance, especially affecting the solid content in slurry preparation of the material. The carbon content range in the present application is conducive to further achieving high kinetic performance and processing performance.

In some embodiments, on the basis of the total weight of the first lithium iron phosphate particles, the carbon content of the first lithium iron phosphate particles is 0.8 wt%, 0.9 wt%, 1.0 wt%, 1.1 wt%, 1.15 wt%, 1.2 wt%, 1.3 wt%, 1.4 wt%, 1.5 wt%, 1.6 wt%, 1.7 wt%, 1.8 wt%, 1.9 wt%, 2.0 wt%, or a range of any two of the above carbon contents or a value within this range.

In some embodiments, on the basis of the total weight of the first lithium iron phosphate particles, the carbon content of the first lithium iron phosphate particles is Cx4 wt%, in which, 0.8≤Cx4≤1.2.

On the basis of the total weight of the first lithium iron phosphate particles, the carbon content of the first lithium iron phosphate particles is Cx4 wt%; and if 0.8≤Cx4≤1.2, the secondary battery in the present application has good high-temperature storage performance, low manganese dissolution amount, high positive electrode slurry solid content, good high-temperature cycling performance, and high compacted density of the positive electrode plate.

In some embodiments, the carbon in the first lithium iron phosphate particles coats the particle surface. In some embodiments, the carbon in the first lithium iron phosphate particles is embodied within the particles. In some embodiments, the carbon in the first lithium iron phosphate particles partially coats the particle surface and is partially embedded within the particles.

In some embodiments, a ratio z4 of the specific surface area of the first lithium iron phosphate particle to Cx4 meets 1.5≤z4≤8.5. In some embodiments, a ratio z4 of the specific surface area of the first lithium iron phosphate particle to Cx4 meets 3≤z4≤6.

In some embodiments, z4 can be 1.5, 1.8, 2, 2.3, 2.5, 2.8, 3, 3.2, 3.5, 3.75, 3.8, 4, 4.2, 4.3, 4.5, 4.58, 4.8, 4.98, 5, 5.3, 5.42, 5.5, 5.71, 5.8, 5.83, 6, 6.3, 6.5, 6.7, 6.8, 7, 7.3, 7.5, 7.8, 7.9, 8, 8.3, 8.5, 8.6, or a range of any two of the above z4 values or a value within this range.

The ratio z4 of the specific surface area (BET) of the first lithium iron phosphate particles to Cx4 can represent the uniformity and density of the carbon in the first lithium iron phosphate particles; if the primary average particle size and carbon content of the first lithium iron phosphate particles remain unchanged, the low the z4 ratio, the higher the carbon coating utilization rate within the particles, the less free carbon there is, and the more uniform and dense the carbon inside the firs lithium iron phosphate particles is. Increasing the uniformity and density of the included carbon is beneficial for further improving the kinetic performance and gram capacity of the first lithium iron phosphate particles, but excessive carbon density may affect de-intercalation and intercalation of the lithium ions, which will certainly impact the kinetic performance and gram capacity of the secondary battery. The z4 range in the present application is beneficial for ensuring that the carbon in the first lithium iron phosphate particles has an appropriate uniformity and density, thereby improving the conductivity of the particle surface and further improving the gram capacity and kinetic performance of the secondary battery.

In some embodiments, a ratio z4 of the specific surface area of the first lithium iron phosphate particle to Cx4 meets 3.8≤z4≤5.

If the ratio z4 of the specific surface area of the first lithium iron phosphate particles to Cx4 meets 3.8≤z4≤5, the secondary battery in the present application has good high-temperature storage performance, low manganese dissolution amount, high solid content of positive electrode slurry, good high-temperature cycling performance, and high compacted density of the positive electrode plate.

In some embodiments, the primary average particle size s1 of the first particles is 120-600 nm, the primary average particle size s2 of the second particles meet 650nm≤s2≤3000nm, and/or the primary average particle size s3 of the third particles meet 30nm≤s3≤100nm.

In some embodiments, the primary average particle size s1' of the first lithium iron manganese phosphate particles is 120-600 nm, the primary average particle size s2' of the first lithium iron phosphate particles meets 650nm≤s2'≤3000nm, and/or the primary average particle size s3' of the second lithium iron phosphate particles meets 30nm≤s3'≤100nm.

In some embodiments, the primary average particle size s1' of the first lithium iron manganese phosphate particles is 150-210 nm, the primary average particle size s2' of the first lithium iron phosphate particles meets 650nm≤s2'≤3000nm, and/or the primary average particle size s3' of the second lithium iron phosphate particles meets 30nm≤s3'≤100nm.

In some embodiments, the primary average particle size s1' of the first lithium iron manganese phosphate particles is 150-210 nm, the primary average particle size s2' of the first lithium iron phosphate particles meets 870nm≤s2'≤3000nm, and/or the primary average particle size s3' of the second lithium iron phosphate particles meets 60nm≤s3'≤200nm.

In some embodiments, the primary average particle size s1' of the first lithium iron manganese phosphate particles is 120-600 nm, the primary average particle size s2" of the second lithium iron manganese phosphate particles meets 650nm≤s2"≤3000nm, and/or the primary average particle size s3" of the third lithium iron manganese phosphate particles meets 30nm≤s3"≤100nm.

In some embodiments, the primary average particle size s1' of the first lithium iron manganese phosphate particles is 150-210 nm, the primary average particle size s2" of the second lithium iron manganese phosphate particles meets 650nm≤s2"≤3000nm, and/or the primary average particle size s3" of the third lithium iron phosphate particles meets 30nm≤s3"≤100nm.

In some embodiments, a capacity ratio η of the first lithium iron phosphate particles is ≥ 88%, η is defined as follows:
a battery using the first lithium iron phosphate particles as the positive electrode active material is subjected to constant-current charge-discharge twice at a rate of 0.1 C within a voltage range of 2.0-3.75 V, and then subjected to constant-current charge-discharge once at a rate of 1 C; in the charge-discharge test at the rate of 1 C, a capacity value extracted at a discharge voltage of 3.2 V is recorded as C1, and the capacity value extracted at the discharge voltage of 2.0 V is recorded as C2, and η=C1/C2; and the charging process includes constant-voltage charge, the constant voltage is 3.75 V, and a constant voltage cutoff current is 50 µA.

In some embodiments, η can be 88%, 88.1%, 89%, 90%, 90.1%, 91%, 92%, 92.2%, 93%, 94%, 94.1%, 94.5%, 95%, 95.1%, or a range of any two of the above η values or a value within this range.

The η of the first lithium iron phosphate particles can be measured using methods and devices known in the art. As an example, a button cell is first prepared by the following processes: 2.0000 g of first lithium iron phosphate particles are mixed with 0.1111 g of conductive carbon black and 0.1111 g of polyvinylidene fluoride, and then the obtained mixture is added to 2.5 g of organic solvent N-methylpyrrolidone and fully uniformly mixed to obtain a slurry. The slurry is coated onto an aluminum foil, with a coating thickness of 140 µm, the aluminum foil is dried under vacuum at 120°C for 2 h and then punched into round pieces with a diameter of 13 mm using a puncher. The round pieces are tableted by a tablet press at 10 MPa, and the obtained tablets are subjected to temperature maintaining under vacuum at 120°C for 12 h, so as to obtain the positive electrode plate. The positive electrode plate is weighed, in which, the load of the lithium iron phosphate particles is 11-12 mg. The button cell is assembled in an argon-protected glove box, in which, a lithium metal sheet serves as the negative electrode, a mixed solvent consisting of EC (ethylene carbonate) and DMC (1,2-dimethyl carbonate) in a volume ratio of 1:1 serves as the electrolyte solution, LiPF6 serves as the electrolyte, and a Celgard2400 microporous polyethylene membrane serves as the separator.

The prepared button cell is subjected to electrical performance testing by a blue electric tester; specifically, the button cell is subjected to constant-current charge-discharge twice at a rate of 0.1 C within a voltage range of 2.0-3.75 V, and then subjected to constant-current charge-discharge once at a rate of 1 C; in the charge-discharge test at a rate of 1 C, the capacity value extracted at a discharge voltage of 3.2 V is recorded as C1, and the capacity value extracted at a discharge voltage of 2.0V is recorded as C2, and η=C1/C2. The charging process includes constant-voltage charge, the constant voltage is 3.75 V, and a constant voltage cutoff current is 50 µA.

The capacity ratio η of the first lithium iron phosphate particles reflects the kinetic performance and platform retention, and it can be adjusted by regulating the primary average particle size of the first lithium iron phosphate particles, the carbon content, the carbon source, the ratio of carbon film-forming agents, the modifier and content thereof. In the present application, the η of the first lithium iron phosphate particles is ≥88%, so high kinetic performance is achieved. Moreover, if η is high, the secondary battery can still maintain high power performance even when discharged to low state of charge (SOC), that is, the voltage drop of a battery with high η is small when the battery is discharged at low charge and high current.

In some embodiments, the aspect ratio of the second lithium iron phosphate particles is ≥1.1. In some embodiments, the aspect ratio of the second lithium iron phosphate particles is ≥1.3.

If the aspect ratio of the second lithium iron phosphate particles is ≥1.3, the material has high crystallinity, and therefore, the secondary battery in the present application has good high-temperature storage performance, low manganese dissolution amount, good high-temperature cycling performance, and high gram capacity.

In the present application, the term "aspect ratio" refers to a ratio of the diameter in a long-axis direction to the diameter in a short-axis direction of the primary particle, the diameter in the long-axis direction is set to be a, the diameter in the short-axis direction is set to be b, and then the aspect ratio = a/b; and this parameter is often used for describing particle morphology and can be used in sphericity measurement.

The aspect ratio of the second lithium iron phosphate particles can be measured using methods and device known in the art. For example, it can be tested by the following method: a cold-pressed electrode plate is collected and cut via an Ar particle beam perpendicular to the direction of the large surface to expose an end surface, and then the pictures can be obtained by the scanning electron microscope. Then, the pictures of the cross section of the electrode plate obtained from the scanning electron microscope are analyzed using picture software to measure the long axis a and short axis b of the particles, and the ratio is obtained, which is the aspect ratio of the particles.

In some embodiments, the ratio W of the intensity of the (020) crystal plane diffraction peak to the intensity of the (211) crystal plane diffraction peak of the second lithium iron phosphate particles is ≥0.98. In some embodiments, the ratio W of the intensity of the (020) crystal plane diffraction peak to the intensity of the (211) crystal plane diffraction peak of the second lithium iron phosphate particles is ≥1.03. In some embodiments, the ratio W of the intensity of the (020) crystal plane diffraction peak to the intensity of the (211) crystal plane diffraction peak of the second lithium iron phosphate particles is ≥1.08.

If the ratio W of the diffraction peak intensity of the (020) crystal plane to the diffraction peak intensity of the (211) crystal plane of the second lithium iron phosphate particles is ≥1.03, the material has high crystallinity; in addition, high W indicates that more of the (020) crystal plane is exposed, which is more conducive to the de-intercalation and intercalation of the lithium ions, and therefore, the secondary battery in the present application has good high-temperature storage performance, low manganese dissolution amount, good high-temperature cycling performance, and high gram capacity.

The ratio W of the intensity of the (020) crystal plane diffraction peak to the intensity of the (211) crystal plane diffraction peak can be measured using methods and devices known in the art. For example, it can be tested by the following methods:
the ratio of the intensity of the diffraction peaks of the second lithium iron phosphate particles is tested by X-rays; a copper-target X-ray diffractometer is utilized, the second lithium iron phosphate particles are placed on a test platform of the X-ray diffractometer (model: Shimadzu XRD-7000); a starting angle of scanning is 10°, an ending angle is 90°, the step size is 0.013; the test is started to obtain a diffraction pattern of the second lithium iron phosphate particles within a diffraction angle range of 10° to 90°; and the ratio W of the intensity of the (020) crystal plane diffraction peak to the intensity of the (211) crystal plane diffraction peak is determined according to the diffraction pattern.

In some embodiments, the specific surface area of the second lithium iron phosphate particles is 11 m²/g-14 m²/g. In some embodiments, the specific surface area of the second lithium iron phosphate particles is 11 m²/g-12 m²/g. In some embodiments, the specific surface area of the second lithium iron phosphate particles is 12 m²/g-14 m²/g.

In some embodiments, on the basis of the total weight of the second lithium iron phosphate particles, the carbon content of the second lithium iron phosphate particles is Cx5 wt%, and the ratio z5 of the specific surface area of the second lithium iron phosphate particles to Cx5 meets 8≤z5≤11. In some embodiments, 8.1≤z5≤10.4. In some embodiments, on the basis of the total weight of the second lithium iron phosphate particles, the carbon content of the second lithium iron phosphate particles is Cx5 wt%, and the ratio z5 of the specific surface area of the second lithium iron phosphate particles to Cx5 is 8.1, 8.9, 10.4, or a range of any two of the above z5 values or a value within this range.

In some embodiments, the carbon in the second lithium iron phosphate particles coats the particle surface. In some embodiments, the carbon contained in the second lithium iron phosphate particles is embodied in the particles. In some embodiments, the carbon in the second lithium iron phosphate particles partially coats the particle surface and is partially embedded within the particles.

In some embodiments, the specific surface area of the first lithium iron manganese phosphate particles is 8-20 m²/g. In some embodiments, the specific surface area of the first lithium iron manganese phosphate particles is 10-20 m²/g.

In some embodiments, the specific surface area of the first lithium iron manganese phosphate particles is 8 m²/g, 9 m²/g, 10 m²/g, 10.5 m²/g, 11 m²/g, 12 m²/g, 13 m²/g, 14 m²/g, 15 m²/g, 16 m²/g, 17 m²/g, 18 m²/g, 19 m²/g, 20 m²/g, or a range of any two of the above specific surface areas or a value within this range.

In some embodiments, the specific surface area of the first lithium iron manganese phosphate particles is 10-18 m²/g. In some embodiments, the specific surface area of the first lithium iron manganese phosphate particles is 10-17 m²/g.

If the specific surface area of the first lithium iron manganese phosphate particles is 10 m²/g-17 m²/g, the secondary battery in the present application embodiment has good high-temperature storage performance, low manganese dissolution amount, good high-temperature cycling performance, and high positive electrode compacted density.

In some embodiments, on the basis of the total weight of the first lithium iron manganese phosphate particles, the carbon content of the first lithium iron manganese phosphate particles is Cx1 wt%, in which, 1.2≤Cx1≤1.8.

In some embodiments, on the basis of the total weight of the first lithium iron manganese phosphate particles, the carbon content of the lithium iron manganese phosphate particles is Cx1 wt%, in which, Cx1 is 1.2, 1.3, 1.4, 1.5, 1.6, 1.65, 1.7, 1.8, or any range of two Cx1 values or a value within this range.

In some embodiments, the carbon in the first lithium iron manganese phosphate particles coats the particle surface. In some embodiments, the carbon in the first lithium iron manganese phosphate particles is embedded within the particles. In some embodiments, the carbon in the first lithium iron manganese phosphate particles partially coats the particle surface and is partially embedded in the particles.

In some embodiments, the ratio z1 of the specific surface area of the first lithium iron manganese phosphate particles to Cx1 meets 7≤z1≤13. In some embodiments, the ratio z of the specific surface area of the first lithium iron manganese phosphate particles to Cx1 meets 7.1≤z1≤12.5. In some embodiments, the ratio z1 of the specific surface area of the first lithium iron manganese phosphate particles to Cx is 7, 7.1, 7.3, 7.5, 7.6, 7.9, 8.3, 8.6, 8.8, 9.1, 9.3, 9.4, 12.5, 13, or any range of two z1 or a value within this range.

In some embodiments, the specific surface area of the second lithium iron manganese phosphate particles is 5 m²/g-12 m²/g.

In some embodiments, the specific surface area (BET) of the second lithium iron manganese phosphate particles can be 5 m²/g, 5.5 m²/g, 6 m²/g, 6.5 m²/g, 7 m²/g, 7.5 m²/g, 8 m²/g, 8.5 m²/g, 9 m²/g, 9.5 m²/g, 10 m²/g, 10.5 m²/g, 11 m²/g, 11.5 m²/g, 12 m²/g, or a range of any two of the above BET values or a value within this range.

In some embodiments, on the basis of the total weight of the second lithium iron manganese phosphate particles, the carbon content of the second lithium iron manganese phosphate particles is Cx2 wt%, in which, 0.8≤Cx2≤2.0.

In some embodiments, on the basis of the total weight of the second lithium iron manganese phosphate particles, the carbon content of the second lithium iron manganese phosphate particles is 0.8 wt%, 0.9 wt%, 1.0 wt%, 1.1 wt%, 1.15 wt%, 1.2 wt%, 1.3 wt%, 1.4 wt%, 1.5 wt%, 1.6 wt%, 1.7 wt%, 1.8 wt%, 1.9 wt%, 2.0 wt%, or a range of any two of the above carbon contents or a value within this range.

In some embodiments, the specific surface area of the third lithium iron manganese phosphate particles is 15 m²/g-30 m²/g.

In some embodiments, the specific surface area (BET) of the third lithium iron manganese phosphate particles can be 15 m²/g, 15.5 m²/g, 16 m²/g, 16.5 m²/g, 17 m²/g, 17.5 m²/g, 18 m²/g, 18.5 m²/g, 19 m²/g, 19.5 m²/g, 20 m²/g, 20.5 m²/g, 21 m²/g, 21.5 m²/g, 22 m²/g, 22.5 m²/g, 23 m²/g, 23.5 m²/g, 24 m²/g, 24.5 m²/g, 25 m²/g, 25.5 m²/g, 26 m²/g, 26.5 m²/g, 27 m²/g, 27.5 m²/g, 28 m²/g, 28.5 m²/g, 29 m²/g, 29.5 m²/g, 30 m²/g, or a range of any two of the above BET values, or a value within this range.

In some embodiments, on the basis of the total weight of the third lithium iron manganese phosphate particles, the carbon content of the third lithium iron manganese phosphate particles is Cx3 wt%, in which, 0.8≤Cx3≤2.0.

In some embodiments, on the basis of the total weight of the third lithium iron manganese phosphate particles, the carbon content of the third lithium iron manganese phosphate particles is 0.8 wt%, 0.9 wt%, 1.0 wt%, 1.1 wt%, 1.15 wt%, 1.2 wt%, 1.3 wt%, 1.4 wt%, 1.5 wt%, 1.6 wt%, 1.7 wt%, 1.8 wt%, 1.9 wt%, 2.0 wt%, or a range of any two of the above carbon contents or a value within this range.

In some embodiments, the first lithium iron phosphate particles meet at least one selected from the group consisting of (a)-(f):
(a) the Dv10 of the first lithium iron phosphate particles is ≥0.2µm;
(b) the Dv50 of the first lithium iron phosphate particles is 0.5-5 µm;
(c) the Dv90 of the first lithium iron phosphate particles is ≤10µm;
(d) the Dv99 of the first lithium iron phosphate particles is ≤12µm;
(e) a powder compacted density of the first lithium iron phosphate under 3 tons of pressure is ≥2.25g/cm³; and
(f) a powder resistivity of the first lithium iron phosphate is less than 60 Ω•cm.

In the present application, the term "Dv10" refers to the particle size corresponding to the cumulative volumetric particle size distribution percentage in the particles reaching 10%.

In the present application, the term "Dv90" refers to the particle size corresponding to the cumulative volumetric particle size distribution percentage in the particles reaching 90%.

In the present application, the term "Dv99" refers to the particle size corresponding to the cumulative volumetric particle size distribution percentage in the particles reaching 99%.

In the present application, the term "powder compacted density" refers to the density of a compacted blank with a certain density and strength formed during an external force compression process in which as the powder moves and deforms, larger voids are filled, the contact area between particles increases, the attraction between atoms is generated, and the mechanical fit between particles is enhanced, and the unit is g/cm³.

In some embodiments, the Dv10 of the first lithium iron phosphate particles is <Dv50.

In some embodiments, the Dv90 of the first lithium iron phosphate particles is <Dv50.

In some embodiments, the Dv50 of the first lithium iron phosphate particles can be 500 nm, 600 nm, 700 nm, 800 nm, 900 nm, 1,000 nm, 1,100 nm, 1,200 nm, 1,300 nm, 1,400 nm, 1,500 nm, 1,700 nm, 1,900 nm, 2,000 nm, 2,300 nm, 2,500 nm, 2,700 nm, 2,900 nm, 3,000 nm, 3,200 nm, 3,400 nm, 3,600 nm, 3,800 nm, 4,000 nm, 4,200 nm, 4,400 nm, 4,600 nm, 4,800 nm, or 5,000 nm, or a range of any two of the Dv50 values of the product after the second pulverization or a value within this range.

The Dv10, Dv50, Dv90, and Dv99 of the first lithium iron phosphate particles can be measured using methods and devices known in the art. For example, it can be measured by a laser particle size analyzer (Malvern Master Size 3000) with reference to GB/T19077.1-2016.

The powder compacted density of the first lithium iron phosphate particles under different pressures can be measured using methods and devices known in the art. For example, it can be measured by a compacted density instrument with reference to GB/T 24533-2009. Specifically, a certain amount of lithium iron phosphate particles is placed on a special compaction mold (the diameter of the mold is known), and the mold is hollow in the middle and has a metal disc on each of the top and bottom. The lithium iron phosphate particles are placed between the metal discs, and a metal cylinder is placed on the top; the mold is placed on the compacted density instrument, and different pressures are set (e.g., 3T); the thickness of the lithium iron phosphate particles under different pressures can be read from the device; the powder compacted density of the lithium iron phosphate particles is shown as ρ=m/v, in which, v = (S × H), m refers to the mass of the lithium iron phosphate particles, S refers to the bottom area of the mold, and H refers to the thickness of the lithium iron phosphate particles after compaction.

The powder resistivity of the first lithium iron phosphate particles can be measured using methods and devices known in the art. For example, it can be measured by a powder resistivity instrument (Suzhou Lattice, model: ST2722) with reference to GB/T 33822-2017. Specifically, a certain amount of lithium iron phosphate particles (e.g., 1 g) is weighed and added to a feeding chamber of the powder resistivity instrument, a pressure of 8 MPa is applied, a forward resistivity and a reverse resistivity of the lithium iron phosphate particles are tested respectively, and the average value of the two is taken as the powder resistivity of the lithium iron phosphate particles.

By ensuring that the first lithium iron phosphate particles meet at least one selected from the group consisting of (a)-(f), the first lithium iron phosphate particles can well achieve the technical effects of the present application.

In some embodiments, the first lithium iron phosphate particles are mainly obtained by the following preparation methods:
providing raw materials containing at least a lithium source, an iron source, a phosphorus source, an optional carbon film-forming agent, an optional carbon source, and an optional modifier, and performing sintering at least twice, in which,
a temperature for the first sintering is 500°C-760°C, optionally, 550°C-720°C; and
the temperature for the second sintering is 700°C-800°C, optionally 720°C-780°C.

In some embodiments, the temperature for the first sintering can be 500°C, 530°C, 550°C, 580°C, 600°C, 630°C, 650°C, 680°C, 700°C, 710°C, 720°C, 730°C, 740°C, 750°C, or 760°C, or a range of any two of above temperatures for first sintering or a value within this range; and the temperature for the second sintering can be 700°C, 710°C, 720°C, 730°C, 740°C, 750°C, 760°C, 770°C, 780°C, 790°C, or 800°C, or a range of any two of above temperatures for second sintering or a value within this range.

In some embodiments, the heating rates in the first sintering and second sintering are each independently 2-20 °C/min.

In some embodiments, the heating rates in the first sintering and second sintering are each independently 2°C/min, 5°C/min, 7°C/min, 10°C/min, 13°C/min, 15°C/min, 17°C/min, or 20°C/min.

In some embodiments, the isothermal sintering time for the first sintering is 1-6 h. In some embodiments, the isothermal sintering time for the first sintering can be 1 h, 1.5 h, 2 h, 2.5 h, 3 h, 3.5 h, 4 h, 4.5 h, 5 h, 5.5 h, or 6 h.

In some embodiments, the isothermal sintering time for the second sintering is 2-12 h. In some embodiments, the isothermal sintering time for the second sintering can be 1 h, 1.5 h, 2 h, 2.5 h, 3 h, 3.5 h, 4 h, 4.5 h, 5 h, 5.5 h, 6 h, 6.5 h, 7 h, 7.5 h, 8 h, 8.5 h, 9 h, 9.5 h, 10 h, 10.5 h, 11 h, 11.5 h, or 12 h.

Compared to a traditional preparation method in which particle growth is implemented at high temperature, the first lithium iron phosphate particles in the embodiment of the present application are sintered twice; and controlling the temperature for the two sintering processes is beneficial to preparing the first lithium iron phosphate particles with the primary average particle size and specific surface area in the present application. Further, controlling the heating rate, sintering temperature, and isothermal sintering time for the first sintering and/or second sintering is conducive to reducing the side reactions, thereby well preparing the first lithium iron phosphate particles in the present application. Further, during conventional high-temperature sintering, a carbon coating on the particle surface is prone to cracking, resulting in reduction in the integrity of the carbon coating. According to the present application, low-temperature synthesis of large particles is beneficial for improving the consistency and uniformity of surface carbon coating.

In some embodiments, the first lithium iron phosphate particles are mainly obtained by the following preparation method:
providing raw materials containing at least a lithium source, an iron source, a phosphorus source, a carbon source, a carbon film-forming agent, and a modifier, and performing sintering at least twice, in which,
the carbon content of the material after the first sintering is 0.01wt%-0.79wt%, optionally, 0.05wt%-0.4wt%; and
the carbon content of the material after the second sintering is 0.8wt%-2.0wt%, optionally, 1.0wt%-1.6wt%.

In some embodiments, the carbon content of the material after the first sintering can be 0.01 wt%, 0.05 wt%, 0.1 wt%, 0.15 wt%, 0.20 wt%, 0.25 wt%, 0.30 wt%, 0.35 wt%, 0.40 wt%, 0.45 wt%, 0.50 wt%, 0.55 wt%, 0.60 wt%, 0.65 wt%, 0.70 wt%, 0.75 wt%, or 0.79 wt%, or a range of any two of the above carbon contents or a value within this range; and the carbon content of the material after the second sintering can be 0.8 wt%, 0.9 wt%, 1.0 wt%, 1.1 wt%, 1.2 wt%, 1.3 wt%, 1.4 wt%, 1.5 wt%, 1.6 wt%, 1.7 wt%, 1.8 wt%, 1.9 wt%, or 2.0 wt%, or a range of any two of the above carbon contents or a value within this range.

In the preparation method in the embodiment of the present application, the carbon source added before the first sintering can effectively reduce the trivalent iron in the raw materials, thereby improving the purity and stability of the product. Further, by means of controlling the temperature for the first sintering and the carbon content of an intermediate after the first sintering within the above range, the primary particle size of a first lithium iron phosphate particle precursor obtained after the first sintering can be increased; specifically, during the first sintering, low carbon content is beneficial to reducing the barrier effect of a carbon layer on the growth of the first lithium iron phosphate particles, and is conducive to the crystallization growth of the first lithium iron phosphate particle precursor at low temperature. Moreover, it also facilitates a solid-phase diffusion reaction between the modifier that may be added and the first lithium iron phosphate material, thereby achieving high-concentration metal ion modification. By means of controlling the temperature for the second sintering and the carbon content of the sintered material within the above range, the surfaces of the first lithium iron phosphate particles can be well coated with the carbon to form a uniform and dense carbon coating, which is beneficial to improving the surface conductivity of the first lithium iron phosphate particles, as well as improving the kinetic performance and gram capacity.

In some embodiments, the raw materials containing at least the lithium source, the iron source, the phosphorus source, the carbon source, the modifier, and the carbon film-forming agent are provided, and sintering is performed at least twice.

In some embodiments, on the basis of the atomic molar number of each element, the mixing ratio of the lithium source, the iron source, and the phosphorus source meets: Fe: P = (0.96-0.985):1 and Li: Fe = (1.0-0.95):1.1.

In some embodiments, on the basis of the atomic molar number of each element, the mixing ratio of the iron source and the phosphorus source meets: Fe: P = 0.96:1, Fe: P = 0.965:1, Fe: P = 0.97:1, Fe: P = 0.975:1, Fe: P = 0.98:1, or Fe: P = 0.985:1.

In some embodiments, on the basis of the atomic molar number of each element, the mixing ratio of the lithium source and the iron source meets: Li: Fe = 1.0:1.1, Li: Fe = 0.99:1.1, Li: Fe = 0.98:1.1, Li: Fe = 0.97:1.1, Li: Fe = 0.96:1.1, or Li: Fe = 0.95:1.1.

In some embodiments, the weight ratio of the carbon source to the carbon film-forming agent is (9-0.25):1. In some embodiments, the weight ratio of the carbon source to the carbon film-forming agent can be 9:1, 8:1, 7:1, 6:1, 5:1, 4:1, 3:1, 2:1, 1:1, 0.8:1, 0.5:1, or 0.25:1.

In some embodiments, the lithium source is a lithium-containing compound. In some embodiments, the lithium source includes at least one of lithium dihydrogen phosphate, lithium oxalate, lithium carbonate, lithium oxide, lithium hydroxide, and lithium acetate. In some embodiments, the lithium source includes lithium carbonate.

In some embodiments, the iron source is an iron-containing compound. In some embodiments, the iron source is an iron-containing compound. In some embodiments, the iron source includes at least one selected from the group consisting of ferric hydroxide, ferrous chloride, ferric oxide, ferric phosphate, ferric pyrophosphate, ferrous oxalate, iron powder, ferric nitrate, ferroferric oxide, and ferric hydroxide. In some embodiments, the iron source includes ferric oxide.

In some embodiments, the phosphorus source is a phosphoric acid compound. In some embodiments, the phosphorus source includes at least one selected from the group consisting of phosphoric acid, ammonium dihydrogen phosphate, and diammonium hydrogen phosphate. In some embodiments, the phosphorus source includes phosphoric acid.

In some embodiments, the carbon source includes at least one selected from the group consisting of citric acid, glucose, sucrose, starch, fructose, and lactose. In some embodiments, the carbon source includes glucose.

In some embodiments, the carbon film-forming agent includes at least one selected from the group consisting of polyethylene glycol, polyaniline, polyacrylonitrile, polyvinylpyrrolidone, and polyvinyl alcohol. In some embodiments, the carbon film-forming agent includes polyaniline.

In some embodiments, the modifier includes at least one selected from the group consisting of titanium dioxide, vanadium pentoxide, tetrabutyl titanate, ammonium metavanadate, niobium ethoxide, niobium oxalate, niobium pentoxide, magnesium hydroxide, and magnesium nitrate. In some embodiments, the modifier includes titanium dioxide.

The raw materials in the above ratio are beneficial to forming the first lithium iron phosphate particles in the present application.

In some embodiments, the preparation method for the first lithium iron phosphate particles includes the following steps:
performing first pulverization after the first sintering, and performing second pulverization after the second sintering, in which,
the Dv50 of a product after the first pulverization is 300-1,200 nm, optionally, 400-1,100 nm; and
the Dv50 of the product after the second pulverization is 500-5,000 nm, optionally, 700-2,500 nm.

In the present application, the term "Dv50" refers to the particle size corresponding the cumulative volumetric particle size distribution percentage in the particles reaching 50%.

In some embodiments, the Dv50 of the product after the first pulverization can be 300 nm, 400 nm, 500 nm, 600 nm, 700 nm, 800 nm, 900 nm, 1,000 nm, 1,100 nm, 1,200 nm, or a range of any two of the above Dv50 values of the product after the first pulverization or a value within this range.

In some embodiments, the Dv50 of the product after the second pulverization can be 500 nm, 600 nm, 700 nm, 800 nm, 900 nm, 1,000 nm, 1,100 nm, 1,200 nm, 1,300 nm, 1,400 nm, 1,500 nm, 1,700 nm, 1,900 nm, 2,000 nm, 2,300 nm, 2,500 nm, 2,700 nm, 2,900 nm, 3,000 nm, 3,200 nm, 3,400 nm, 3,600 nm, 3,800 nm, 4,000 nm, 4,200 nm, 4,400 nm, 4,600 nm, 4,800 nm, or 5,000 nm, or a range of any two of the above Dv50 values of the product after the second pulverization, or a value within this range.

In some embodiments, the pulverization includes one or more of mechanical pulverization, grinding, sand milling, and air jet milling.

The Dv50 of particles can be measured using methods and devices commonly used in the field. As an example, it can be measured by the laser particle size analyzer (Malvern Master Size 3000) with reference to GB/T19077.1-2016.

By means of controlling the Dv50 of the product after the first pulverization within the above range, the barrier effect of the added carbon source and modifying elements that might be added on the growth of a first lithium iron phosphate particle precursor crystal can be reduced, and it is conducive to preparing a micron-sized lithium iron phosphate particle precursor. By means of controlling the Dv50 of the product after the second pulverization within the above range, the first lithium iron phosphate particles with the primary average particle size in the present application can be obtained.

In a second aspect, the present application provides an electrical apparatus, including the secondary battery as described in the first aspect of the present application.

In addition, the secondary battery and electrical apparatus in the present application will be described below with appropriate reference to the accompanying drawings.

In an embodiment of the present application, a secondary battery is provided.

In general, the secondary battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte plays the role of conducting ions between the positive electrode plate and the negative electrode plate. The separator is arranged between the positive electrode plate and the negative electrode plate and mainly functions to prevent the positive and negative electrodes from short-circuiting while enabling ions to pass through.

### [Positive electrode plate]

The positive electrode plate includes a positive electrode current collector and a positive electrode film layer arranged on at least one surface of the positive electrode current collector.

As an example, the positive electrode current collector has two surfaces opposite in its own thickness direction, and the positive electrode film layer is arranged on either one or both of the two opposite surfaces of the positive electrode current collector.

In some embodiments, a metal foil or a composite current collector can be employed as the positive electrode current collector. For example, an aluminum foil can be employed as the metal foil. The composite current collector may include a polymer base layer and a metal layer formed on at least one surface of the polymer base layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode film layer optionally includes a binder. As an example, the binder may includes at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally includes a conductive agent. As an example, the conductor may include at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductor, the binder, and any other component, for preparing the positive electrode plate in a solvent (such as N-methyl pyrrolidone) to form a positive electrode slurry; and coating the positive electrode slurry on the positive electrode current collector, drying, and cold pressing, to provide the positive electrode plate.

### [Negative electrode plate]

The negative electrode plate includes a negative electrode current collector and a negative electrode film layer arranged on at least one surface of the negative electrode current collector, and the negative electrode film layer includes a negative electrode active material.

For example, the negative electrode current collector has two surfaces opposite to each other in a thickness direction of the negative electrode current collector, and the negative electrode film layer is arranged on either or both of the two opposite surfaces of the negative electrode current collector.

In some embodiments, a metal foil or a composite current collector can be employed as the negative electrode current collector. For example, a copper foil can be employed as the metal foil. The composite current collector may include a polymer material base layer and a metal layer formed on at least one surface of the polymer material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. By way of example, the negative electrode active material may include at least one of the following materials: artificial graphite, natural graphite, soft carbon, hard carbon, a silicon-based material, a tin-based material, lithium titanate, etc. The silicon-based material may be selected from at least one of the group consisting of elemental silicon, a silicon-oxygen compound, a silicon-carbon composite, a silicon-nitrogen composite, or a silicon alloy. The tin-based material may be selected from at least one of the group consisting of elemental tin, a tin-oxygen compound, and a tin alloy. However, the present application is not limited to these materials. Other traditional materials that can be used as negative electrode active materials for batteries may also be used. These negative electrode active materials may be used alone or in a combination of two or more thereof.

In some embodiments, the negative electrode film layer further optionally includes a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate may be prepared by: dispersing the above components, such as the negative electrode active material, the conductive agent, the binder and any other components, for preparing the negative electrode plate in a solvent (such as deionized water) to form a negative electrode slurry; and coating the negative electrode slurry on a negative electrode current collector, and performing drying and cold pressing processes to obtain the negative electrode plate.

### [Electrolyte]

The electrolyte plays the role of conducting ions between the positive electrode plate and the negative electrode plate. The present application has no specific limitation on the type of the electrolyte, which may be selected according to requirements. For example, the electrolyte may be liquid, gelled, or all solid.

In some embodiments, an electrolyte solution is used as the electrolyte. The electrolyte solution contains an electrolyte salt and a solvent.

In some embodiments, the electrolyte salt may be selected from at least one of the group consisting of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of the group consisting of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally includes an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the secondary battery also includes the separator. The type of the separator is not specially limited in the present application, and any well-known porous separator with high chemical stability and mechanical stability can be selected.

In some embodiments, the material of the separator can be selected from at least one of a glass fiber, non-woven fabric, polyethylene, polypropylene and polyvinylidene fluoride. The separator may be a single-layer thin film or a multi-layer composite thin film, and is not particularly limited. When the separator is a multilayer composite thin film, the materials of the layers may be the same or different without special limitations.

In some embodiments, the positive electrode plate, the negative electrode plate, and the separator may be made into an electrode assembly by a winding process or a lamination process.

In some embodiments, the secondary battery can include an outer package. The outer package can be used for encapsulating the aforementioned electrode assembly and electrolyte.

In some embodiments, the outer package of the secondary battery can be a hard shell, such as a hard plastic shell, an aluminum shell, and a steel shell. The outer package of the secondary battery can also be a soft package, such as a bag type soft package. The material of the soft package may be plastic, and examples of the plastic may include polypropylene, polybutylene terephthalate, polybutylene succinate, and the like.

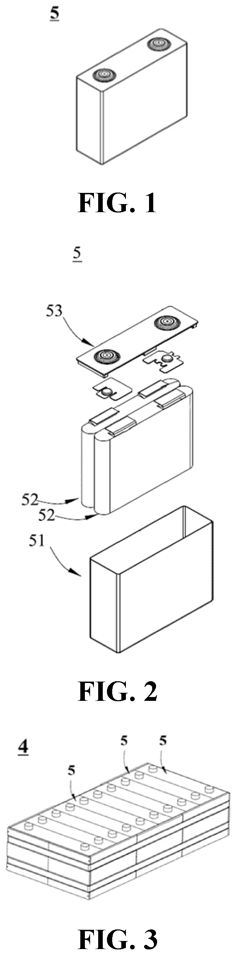

The shape of the secondary battery is not particularly limited in the present application, and may be a cylinder, a square, or any other shape. For example, FIG. 1 shows a secondary battery 5 with a square structure as an example.

In some embodiments, referring to FIG. 2, the outer package may include a case 51 and a cover plate 53. The case 51 may include a bottom plate and a side plate connected to the bottom plate, which enclose to form an accommodating cavity. The case 51 has an opening that is in communication with the accommodating cavity, and the cover plate 53 can cover the opening to close the accommodating cavity. The positive electrode plate, the negative electrode plate and the separator can be made into an electrode assembly 52 by a winding process or a lamination process. The electrode assembly 52 is encapsulated within the accommodating cavity. The electrolyte solution impregnates the electrode assembly 52. The number of electrode assemblies 52 included in the secondary battery 5 may be one or more, and may be selected by those skilled in the art according to specific actual requirements.

In some embodiments, the secondary batteries may be assembled into a battery module, the number of secondary batteries included in the battery module may be one or more, and the specific number may be selected by those skilled in the art according to the application and capacity of the battery module.

FIG. 3 shows battery module 4 as an example. With reference to FIG. 3, in the battery module 4, a plurality of secondary batteries 5 can be sequentially arranged in the length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery modules may be further assembled into a battery pack, the number of battery modules included in the battery pack may be one or more, and the specific number may be selected by those skilled in the art based on the application and capacity of the battery pack.

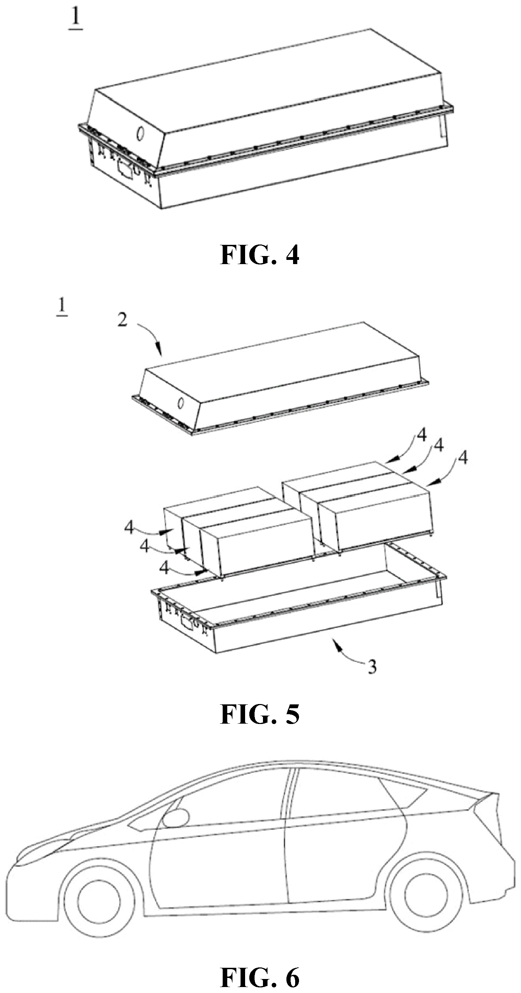

In FIG. 4 and FIG. 5, a battery pack 1 is taken as an example. With reference to FIG. 4 and FIG. 5, the battery pack 1 can include a battery box and a plurality of battery modules 4 arranged in the battery box. The battery box includes an upper box body 2 and a lower box body 3, and the upper box body 2 can cover the lower box body 3 and form a closed space for accommodating the battery modules 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus can include, but is not limited to, a mobile apparatus (e.g., a mobile phone or a laptop), an electric vehicle (e.g., an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the electrical apparatus, the secondary battery, the battery module, or the battery pack may be selected according to its use requirements.

FIG. 6 is an example of an electrical apparatus. The electrical apparatus is an all-electric vehicle, a hybrid electric vehicle, a plug-in hybrid electric vehicle, or the like. To satisfy the need of the electrical apparatus for a high power and high energy density of secondary batteries, a battery pack or a battery module can be used.

As another example, the apparatus may be a mobile phone, a tablet, a laptop, etc. The apparatus is generally required to be light and thin, and may use a secondary battery as a power source.

### EXAMPLES

Embodiments of the present application will be described below. The embodiments described below are exemplary and are provided only to explain the present application, and should not be construed as limiting the present application. If the specific technology or conditions are not indicated in the embodiments, the technology or conditions described in the literature in the art or in accordance with the product specification shall be followed. The reagents or instruments used without manufacturer indicated are all commercially available conventional products.

### Example 1

### (1) Preparation of positive electrode slurry:

### Preparation of first lithium iron phosphate particles:

Lithium carbonate, ferric oxide, phosphoric acid, glucose, titanium dioxide (on the basis of the total weight of lithium iron phosphate particles, the titanium dioxide was added with the amount meeting the requirement that the titanium content in the prepared lithium iron phosphate particles was 5,000 ppm), and polyaniline were weighed separately, in which, the weight ratio of an element Li to an element Fe to an element P met: Fe: P = 0.968:1, Li: Fe=1:0.98, and the weight ratio of glucose to polyaniline met: glucose: polyaniline = 1:2. The amount of glucose added was sufficient to ensure that the carbon content accounted for 0.15% of the weight of the lithium iron phosphate precursor after the first sintering. Water was added to the above substances to obtain a slurry mixture.

The mixture slurry was uniformly mixed with a ball mill and then ground with a sand mill to obtain a slurry having solid content of 38% and Dv50 of 0.40 µm; the slurry was spray-dried (the negative pressure of a high-speed spray dryer was -650 Pa to -200 Pa, the inlet temperature was 300°C to 360°C, and the outlet temperature was 100°C to 140°C). The dried reactants were loaded into a sintering furnace for the first sintering, the heating rate was controlled at 5°C/min, the maintaining temperature was controlled at 650°C, and the temperature maintaining time was controlled 4 h. After the material was cooled, it was mechanically ground into powder.

Glucose as a carbon source and polyaniline as a carbon film-forming agent were added to the obtained powder, and then mixed with water to obtain a material with a solid content of 40%. The amount of glucose and polyaniline added met the requirements that the carbon content of the product after the second sintering was 1.2% (on the basis of the total weight of the lithium iron phosphate particles), and the weight ratio of glucose to polyaniline met: glucose: polyaniline = 1:2. The slurry was obtained by processing using the ball mill and the sand mill, and the Dv50 of an insoluble matter in the slurry was 550 nm. The slurry was spray-dried (the negative pressure of the high-speed spray dryer was -650 Pa to -200 Pa, the inlet temperature was 300°C to 360°C, and the outlet temperature was 100°C to 140°C). The dried reactants were loaded into the sintering furnace for second low-temperature sintering (heating rate was controlled at 5°C/min, sintering temperature was controlled at 750°C, and sintering time was controlled at 4 h). After being cooled, the material was subjected to second pulverization to reach a primary average particle size of 870 nm; and after demagnetization, the lithium iron phosphate particles were obtained, with a carbon content of 1.2% and an element Ti content of 5,000 ppm.

The first lithium iron phosphate particles (relevant parameters are shown in Table 1) and the first lithium iron manganese phosphate particles (purchased from Guangdong Brunp Recycling Technology Co., Ltd., with item number CPP-001-001, relevant parameters are shown in Table 2) were mixed according to the area ratio listed in Table 4 to obtain the positive electrode active material; the mixed positive electrode active material, conductor carbon black, binder polyvinylidene fluoride, and dispersant PVP were mixed in a weight percentage of 93:4.0:2.5:0.5, and N-methylpyrrolidone was added; and after thorough mixing, stirring and dispersing, the positive electrode slurry was prepared.

### (2) Preparation of positive electrode plate:

The viscosity of the mixed and uniformly-stirred slurry was adjusted to 8,000-20,000 mPa.s until no delamination occurred, then a double-sided dual-control coating machine was utilized to coat the slurry onto the surface of an aluminum foil substrate at 420mg/1540mm²; and after drying, cold pressing, slitting, and plate forming, the positive electrode plate is finally obtained.

### (3) Preparation of negative electrode plate:

Artificial graphite, conductor carbon black, binder styrene-butadiene rubber (SBR), and thickener sodium carboxymethyl cellulose (CMC) were mixed uniformly in a weight percentage of 95:1.0:2.0:2.0, and deionized water was added; after stirring and dispersing, a negative electrode slurry was obtained, and the negative electrode slurry was coated on a Cu foil substrate at 211mg/1540mm²; and after drying, cold pressing, slitting, and plate forming, the negative electrode plate was obtained.

### (4) Preparation of battery:

The positive electrode plate, the separator, and the negative electrode were stacked in sequence, the separator being able to isolate the negative electrode from the positive electrode; by winding, a bare cell was obtained, and the bare cell was placed in an outer packaging, and the electrolyte solution was injected; and after processes such as encapsulation, formation, and degassing, a lithium-ion battery was obtained.

### Example 2

The Example 2 is mainly different from the Example 1 in that: the primary average particle size of the first lithium iron manganese phosphate particles was 210 nm, the specific surface area was 12 m²/g, and the carbon content was 1.4 wt%; and the first lithium iron manganese phosphate particles were purchased from Guangdong Brunp Recycling Technology Co., Ltd., with item number CPP-001-002 (Guangdong Brunp Recycling Technology Co., Ltd.).

### Example 3

The Example 3 is mainly different from the Example 2 in that: the primary average particle size of the first lithium iron manganese phosphate particles was 120 nm, the specific surface area was 15 m²/g, and the carbon content was 1.65 wt%; and the first lithium iron manganese phosphate particles were purchased from Guangdong Brunp Recycling Technology Co., Ltd., with item number SH-LMFP-1.

### Example 4

The Example 4 is mainly different from the Example 2 in that: the primary average particle size of the first lithium iron manganese phosphate particles was 600 nm, and the specific surface area was 10 m²/g; and the first lithium iron manganese phosphate particles were purchased from Guangdong Brunp Recycling Technology Co., Ltd., with item number SH-LMFP-2.

### Example 5

The Example 5 is mainly different from the Example 2 in that: the primary average particle size of the first lithium iron phosphate particles was 250 nm, and the specific surface area was 9.5 m²/g.

### Example 6

The Example 6 is mainly different from the Example 2 in that: the primary average particle size of the first lithium iron phosphate particles was 300 nm, and the specific surface area was 7.5 m²/g.

### Example 7

The Example 7 is mainly different from the Example 2 in that: the primary average particle size of the first lithium iron phosphate particles was 4,000 nm, and the specific surface area was 4.5 m²/g.

### Example 8

The Example 8 is mainly different from the Example 2 in that: the primary average particle size of the first lithium iron manganese phosphate particles was 480 nm, and the specific surface area was 11 m²/g; and the first lithium iron manganese phosphate particles were purchased from Guangdong Brunp Recycling Technology Co., Ltd., with item number CPP-001-003.

### Example 9

The Example 9 is mainly different from the Example 2 in that: the primary average particle size of the first lithium iron phosphate particles was 3,000 nm, and the specific surface area was 5 m²/g.

### Example 10

The Example 10 is mainly different from the Example 2 in that: the primary average particle size of the first lithium iron phosphate particles was 3,500 nm, and the specific surface area was 4.6 m²/g.

### Example 11

The Example 11 is mainly different from the Example 2 in that: the primary average particle size of the first lithium iron phosphate particles was 500 nm, and the specific surface area was 7 m²/g.

### Example 12

The Example 12 is mainly different from the Example 2 in that: the specific surface area of the first lithium iron manganese phosphate particles was 17 m²/g, and the carbon content was 1.8 wt%; and the first lithium iron manganese phosphate particles were purchased from Guangdong Brunp Recycling Technology Co., Ltd., with item number CPP-001-005.

### Example 13

The Example 13 is mainly different from the Example 2 in that: the specific surface area of the first lithium iron manganese phosphate particles was 10 m²/g, and the carbon content was 1.2 wt%; and the first lithium iron manganese phosphate particles were purchased from Guangdong Brunp Recycling Technology Co., Ltd., with item number CPP-001-009.

### Example 14

The Example 14 is mainly different from the Example 2 in that: the specific surface area of the first lithium iron phosphate particles was 5.5 m²/g, and the carbon content was 1.15 wt%.

### Example 15

The Example 15 is mainly different from the Example 2 in that: the specific surface area of the first lithium iron phosphate particles was 5 m²/g, and the carbon content was 1.2 wt%.

### Example 16

The Example 16 is mainly different from the Example 2 in that: the titanium content of the first lithium iron phosphate particles was 2,500 ppm.

### Example 17

The Example 17 is mainly different from the Example 2 in that: the titanium content of the first lithium iron phosphate particles was 6,000 ppm.

### Example 18

The Example 18 is mainly different from the Example 2 in that: vanadium pentoxide was used instead of titanium dioxide, and the specific surface area of the first lithium iron phosphate particles was 8 m²/g.

### Example 19

The Example 19 is mainly different from the Example 2 in that: vanadium pentoxide was used instead of titanium dioxide.

### Example 20

The Example 20 is mainly different from the Example 2 in that: the specific surface area of the first lithium iron phosphate particles was 3 m²/g, and the carbon content was 0.8 wt%.

### Example 21

The Example 21 is mainly different from the Example 2 in that: the specific surface area of the first lithium iron phosphate particles was 12 m²/g, and the carbon content was 1.4 wt%.

### Example 22

The Example 22 is mainly different from the Example 2 in that: the primary average particle size of the first lithium iron manganese phosphate particles was 500 nm, and the specific surface area was 10.5 m²/g; and the first lithium iron manganese phosphate particles were purchased from Guangdong Brunp Recycling Technology Co., Ltd., with item number CPP-001-013.

### Example 23

The Example 23 is mainly different from the Example 2 in that: the primary average particle size of the first lithium iron manganese phosphate particles was 140 nm, and the specific surface area was 20 m²/g; and the first lithium iron manganese phosphate particles were purchased from Guangdong Brunp Recycling Technology Co., Ltd., with item number CPP-001-026.

### Example 24

The Example 24 is mainly different from the Example 2 in that: the area ratio of the first lithium iron manganese phosphate particles was 70%, while the area ratio of the first lithium iron phosphate particles was 30%.

### Example 25

The Example 25 is mainly different from the Example 2 in that: the area ratio of the first lithium iron manganese phosphate particles was 98%, while the area ratio of the first lithium iron phosphate particles was 2%.

### Example 26

The Example 26 is mainly different from the Example 2 in that: the titanium content of the first lithium iron phosphate particles was 1,000 ppm.

### Example 27

The Example 27 is mainly different from the Example 2 in that: the titanium content of the first lithium iron phosphate particles was 10,000 ppm.

### Example 28

### (1) Preparation of positive electrode slurry:

The source/preparation method for the first lithium iron manganese phosphate particles and the first lithium iron phosphate particles are exactly the same as in the Example 2.

The second lithium iron phosphate particles were purchased from XTC New Energy (XTC), with the item number CPF-014-001; and the relevant parameters are shown in Table 3.

The first lithium iron manganese phosphate particles, the first lithium iron phosphate particles, and the second lithium iron phosphate particles were mixed according to the area ratio listed in Table 1 to obtain the positive electrode active material; the mixed positive electrode active material, conductor carbon black, binder polyvinylidene fluoride, and dispersant PVP were mixed in a weight percentage of 93:4.0:2.5:0.5, and N-methylpyrrolidone was added; and after thorough mixing, stirring, and dispersion, the positive electrode slurry was prepared.

### (2) Preparation of positive electrode plate:

It is exactly the same as in the Example 2.

### (3) Preparation of negative electrode plate:

It is exactly the same as in the Example 2.

### (4) Preparation of battery:

It is exactly the same as in the Example 2.

### Example 29

The Example 29 is mainly different from the Example 28 in that: the area ratio of the first lithium iron manganese phosphate particles was 70%, the area ratio of the first lithium iron phosphate particles was 25%, and the area ratio of the second lithium iron phosphate particles was 5%.

### Example 30

The Example 30 is mainly different from the Example 28 in that: the area ratio of the first lithium iron manganese phosphate particles was 65%, the area ratio of the first lithium iron phosphate particles was 25%, and the area ratio of the second lithium iron phosphate particles was 10%.

### Example 31

The Example 31 is mainly different from the Example 28 in that: the area ratio of the first lithium iron manganese phosphate particles was 74%, the area ratio of the first lithium iron phosphate particles was 25%, and the area ratio of the second lithium iron phosphate particles was 1%.

### Example 32

The Example 32 is mainly different from the Example 28 in that: the primary average particle size of the second lithium iron phosphate particles was 30 nm, and the specific surface area was 14 m²/g; and the second lithium iron phosphate particles were purchased from XTC New Energy (XTC), with item number XW-LFP-1.

### Example 33

The Example 33 is mainly different from the Example 28 in that: the primary average particle size of the second lithium iron phosphate particles was 200 nm, and the specific surface area was 11 m²/g; and the second lithium iron phosphate particles were purchased from XTC New Energy (XTC), with item number XW-LFP-2.

### Example 34

The Example 34 is mainly different from the Example 28 in that: the aspect ratio of the second lithium iron phosphate particles was 1.3, the ratio W of the intensity of the (020) crystal plane diffraction peak diffraction peak to the intensity of the (211) crystal plane diffraction peak was 1.03, and the second lithium iron phosphate particles were purchased from XTC New Energy (XTC), with item number XW-LFP-3.

### Example 35

The Example 35 is mainly different from the Example 28 in that: the aspect ratio of the second lithium iron phosphate particles was 1.3, the ratio W of the intensity of the (020) crystal plane diffraction peak diffraction peak to the intensity of the (211) crystal plane diffraction peak of the second lithium iron phosphate particles was 1.08, and the second lithium iron phosphate particles were purchased from XTC New Energy (XTC), with item number XW-LFP-4.

### Example 36

The Example 36 is mainly different from the Example 28 in that: the second lithium iron manganese phosphate particles (purchased from Guangdong Brunp Recycling Technology Co., Ltd., with item number CPP-010-01; relevant parameters are shown in Table 2) were used instead of the first lithium iron phosphate particles, and the third lithium iron manganese phosphate particles (purchased from Guangdong Brunp Recycling Technology Co., Ltd., with item number CPP-100-05; relevant parameters are shown in Table 3) were used instead of second lithium iron phosphate particles; and the area ratio of the first lithium iron manganese phosphate particles was 75%, the area ratio of the second lithium iron manganese phosphate particles was 23%, and the area ratio of the third lithium iron manganese phosphate particles was 2%.

### Example 37

The Example 37 is mainly different from the Example 36 that: the Mn/Fe molar ratio of the second lithium iron manganese phosphate particles was 0.67 (purchased from Guangdong Brunp Recycling Technology Co., Ltd., with item number CPP-010-03; relevant parameters are shown in Table 2).

### Example 38

The Example 38 is mainly different from the Example 36 in that: the Mn/Fe molar ratio of the second lithium iron manganese phosphate particles was 0.43 (purchased from Guangdong Brunp Recycling Technology Co., Ltd., with item number CPP-010-07; relevant parameters are shown in Table 2), and the Mn/Fe molar ratio of the third lithium iron manganese phosphate particles was 1.5 (purchased from Guangdong Brunp Recycling Technology Co., Ltd., with item number CPP-100-06; relevant parameters are shown in Table 3).

### Example 39

The Example 39 is mainly different from the Example 38 in that: the Mn/Fe molar ratio of the third lithium iron manganese phosphate particles was 0.67 (purchased from Guangdong Brunp Recycling Technology Co., Ltd., with item number CPP-100-067; relevant parameters are shown in Table 3).

### Example 40

The Example 40 is mainly different from the Example 2 in that: the second lithium iron manganese phosphate particles were used instead of the first lithium iron phosphate particles (purchased from Guangdong Brunp Recycling Technology Co., Ltd., with item number CPP-010-01; relevant parameters are shown in Table 2).

### Example 41

The Example 41 is mainly different from the Example 40 in that: the Mn/Fe molar ratio of the second lithium iron manganese phosphate particles was 0.43 (purchased from Guangdong Brunp Recycling Technology Co., Ltd., with item number CPP-010-043; relevant parameters are shown in Table 2).

### Contrast Example 1

The Contrast Example 1 is mainly different from the Example 2 in that: the first lithium iron phosphate particles were not used.

### Contrast Example 2

The Contrast Example 2 is mainly different from the Example 28 in that: the first lithium iron phosphate particles were not used.

### Contrast Example 3

The Contrast Example 3 is mainly different from the Example 40 in that: the Mn/Fe molar ratio of the second lithium iron manganese phosphate particles was 4 (purchased from Guangdong Brunp Recycling Technology Co., Ltd., with item number CPP-010-40; relevant parameters are shown in Table 2).

### Contrast Example 4

The Contrast Example 4 is mainly different from the Example 40 in that: the third lithium iron manganese phosphate particles (purchased from Guangdong Brunp Recycling Technology Co., Ltd., with item number CPP-100-40; relevant parameters are shown in Table 3) with Mn/Fe molar ratio of 4 were used instead of the second lithium iron manganese phosphate particles.

### II. Battery performance testing

### 1) Primary average particle size

### First lithium iron manganese phosphate particles:

The electrode plate was cut via an argon ion beam perpendicular to a large surface to expose a cross section, and the cross section was photographed via the scanning electron microscope; and the longest diameter of the lithium iron manganese phosphate particles was statistically analyzed using the aspect ratio statistical method. The "primary average particle size" refers to the average of the primary particle sizes of all particles, which is numerically equal to the total particle size value divided by the total number of particles. The primary particle size is the longest distance between two connected points on an edge in a cross-sectional view. Specifically, the total number of the lithium iron manganese phosphate particles with the primary particle size greater than 10 nm and a sum of the primary particle size of the lithium iron manganese phosphate particles with the primary particle size greater than 10 nm can be counted in pictures from the scanning electron microscope, primary average particle size of lithium iron manganese phosphate particles = total primary particle size of lithium iron manganese phosphate particles / total number of lithium iron manganese phosphate particles. During counting the particle size, the particles with the primary average particle size less than or equal to 10 nm are not included in the counting range.

### First lithium iron phosphate particles:

The electrode plate was cut via an argon ion beam perpendicular to a large surface to expose a cross section, and the cross section was photographed via the scanning electron microscope; and the longest diameter of the first lithium iron phosphate particles was statistically analyzed using the aspect ratio statistical method. The "primary average particle size" refers to the average of the primary particle sizes of all particles, which is numerically equal to the total particle size value divided by the total number of particles. The primary particle size is the longest distance between two connected points on an edge in a cross-sectional view. Specifically, the total number of the first lithium iron phosphate particles with the primary particle size greater than 80 nm and a sum of the primary particle size of the first lithium iron phosphate particles with the primary particle size greater than 80 nm can be counted in pictures from the scanning electron microscope, primary average particle size of first lithium iron phosphate particles = total primary particle size of first lithium iron phosphate particles/ total number of first lithium iron phosphate particles. During counting the particle size, the particles with the primary average particle size less than or equal to 80 nm are not included in the counting range.

### Second lithium iron manganese phosphate particles:

The electrode plate was cut via an argon ion beam perpendicular to a large surface to expose a cross section, and the cross section was photographed via the scanning electron microscope; and the longest diameter of the second lithium iron manganese phosphate particles was statistically analyzed using the aspect ratio statistical method. The "primary average particle size" refers to the average of the primary particle sizes of all particles, which is numerically equal to the total particle size value divided by the total number of particles. The primary particle size is the longest distance between two connected points on an edge in a cross-sectional view. Specifically, the total number of the second lithium iron manganese phosphate particles with the primary particle size greater than 80 nm and a sum of the primary particle size of the second lithium iron manganese phosphate particles with the primary particle size greater than 80 nm can be counted in pictures from the scanning electron microscope, primary average particle size of second lithium iron manganese phosphate particles = total primary particle size of second lithium iron manganese phosphate particles/ total number of second lithium iron manganese phosphate particles. During counting the particle size, the particles with the primary average particle size less than or equal to 80 nm are not included in the counting range.

### Second lithium iron phosphate particles:

The electrode plate was cut via an argon ion beam perpendicular to a large surface to expose a cross section, and the cross section was photographed via the scanning electron microscope; and the longest diameter of the second lithium iron phosphate particles was statistically analyzed using the aspect ratio statistical method. The "primary average particle size" refers to the average of the primary particle sizes of all particles, which is numerically equal to the total particle size value divided by the total number of particles. The primary particle size is the longest distance between two connected points on an edge in a cross-sectional view. Specifically, the total number of the second lithium iron phosphate particles with the primary particle size greater than 10 nm and a sum of the primary particle size of second lithium iron phosphate particles with the primary particle size greater than 10 nm can be counted in pictures from the scanning electron microscope, primary average particle size of second lithium iron phosphate particles = total primary particle size of second lithium iron phosphate particles/ total number of second lithium iron phosphate particles. During counting the particle size, the particles with the primary average particle size less than or equal to 10 nm are not included in the counting range.

### Third lithium iron manganese phosphate particles:

The electrode plate was cut via an argon ion beam perpendicular to a large surface to expose a cross section, and the cross section was photographed via the scanning electron microscope; and the longest diameter of the third lithium iron manganese phosphate particles was statistically analyzed using the aspect ratio statistical method. The "primary average particle size" refers to the average of the primary particle sizes of all particles, which is numerically equal to the total particle size value divided by the total number of particles. The primary particle size is the longest distance between two connected points on an edge in a cross-sectional view. Specifically, the total number of the third lithium iron manganese phosphate particles with the primary particle size greater than 10 nm and a sum of the primary particle size of the third lithium iron manganese phosphate particles with the primary particle size greater than 10 nm can be counted in pictures from the scanning electron microscope, primary average particle size of third lithium iron manganese phosphate particles = total primary particle size of third lithium iron manganese phosphate particles/ total number of third lithium iron manganese phosphate particles. During counting the particle size, the particles with the primary average particle size less than or equal to 10 nm are not included in the counting range.

### 2) Dv50

The Dv50 of the particles was measured using the laser particle size analyzer (Malvern Master Size 3000) with reference to GB/T19077.1-2016. In addition, Dv10, Dv90, and Dv99 in the present application were also measured.

### 3) Specific surface area

The specific surface area was tested using a gas adsorption method with reference to GB/T19587-2017, specifically, the lithium iron phosphate particles/ lithium iron manganese phosphate particles were collected as samples and placed in a sample tube, and the sample tube was immersed in liquid nitrogen at -196°C; the amount of nitrogen adsorbed on the solid surface under different pressures of 0.05-0.30 was measured; and on the basis of a BET multilayer adsorption theory and its formula, the amount of monolayer adsorption of the sample was calculated, thereby obtaining the specific surface area of the material.

### 4) Carbon content

The carbon content of the lithium iron phosphate particles/ lithium iron manganese phosphate particles was tested by an infrared absorption method after combustion in high-frequency induction furnace, and the specific testing process was in accordance with standard GB/T 20123-2006/ISO 15350:2000.

### 5) Content of element Q (e.g., element Ti) in first lithium iron phosphate particles

The content of the element Q in the first lithium iron phosphate particles was tested with reference to GB/T 33822-2017.

### 6) Area ratio

The areas of the first lithium iron manganese phosphate particles, first lithium iron phosphate particles, second lithium iron manganese phosphate particles, second lithium iron phosphate particles, and third lithium iron manganese phosphate particles were obtained by statistical analysis on the cross section pictures of the electrode plate obtained from the scanning electron microscope through Avizo 3D software, and each area was divided by the total area to obtain the corresponding area ratio.

### 7) Ratio W of intensity of (020) crystal plane diffraction peak to intensity of (211) crystal plane diffraction peak

The ratio of the intensity of the diffraction peaks of the second lithium iron phosphate particles was tested by X-rays; a copper-target X-ray diffractometer was utilized, the second lithium iron phosphate particles were placed on a test platform of the X-ray diffractometer (model: Shimadzu XRD-7000); a starting angle of scanning was 10°, an ending angle was 90°, and the step size was 0.013; the test was started to obtain a diffraction pattern of the second lithium iron phosphate particles within a diffraction angle range of 10° to 90°; and the ratio W of the intensity of the (020) crystal plane diffraction peak to the intensity of the (211) crystal plane diffraction peak was determined according to the diffraction pattern.

### 8) Aspect ratio

The aspect ratio is a ratio of the diameter in a long-axis direction to the diameter in a short-axis direction of the primary particle, the diameter in the long-axis direction is set to be a, the diameter in the short-axis direction is set to be b, and then the aspect ratio = a/b; and this parameter is often used for describing particle morphology and can be used in sphericity measurement.

Test method: a cold-pressed electrode plate was collected and cut via an Ar particle beam perpendicular to the direction of the large surface to expose an end surface, and then the pictures were obtained by the scanning electron microscope. Then, the pictures of the cross section of the electrode plate obtained from the scanning electron microscope were analyzed using picture software to measure the long axis a and short axis b of the particles, and the ratio was obtained, which was the aspect ratio of the particles.

### 9) Capacity ratio η of first lithium iron phosphate particles in examples and contrast examples when discharged to 3.2 V and 2.0 V

A button cell was first prepared by the following processes: 2.0000 g of first lithium iron phosphate particles were mixed with 0.1111 g of conductive carbon black and 0.1111 g of polyvinylidene fluoride, and then the obtained mixture was added to 2.5 g of organic solvent N-methylpyrrolidone and fully uniformly mixed to obtain a slurry. The slurry was coated onto an aluminum foil, with a coating thickness of 140 µm, the aluminum foil was dried under vacuum at 120°C for 2 h and then punched into round pieces with a diameter of 13 mm using a puncher. The round pieces were tableted by a tablet press at 10 MPa, and the obtained tablets were subjected to temperature maintaining under vacuum at 120°C for 12 h, so as to obtain the positive electrode plate. The positive electrode plate was weighed, in which, the load of the lithium iron phosphate particles was 11-12 mg. The button cell was assembled in an argon-protected glove box, in which, a lithium metal sheet served as the negative electrode, a mixed solvent of EC (ethylene carbonate) and DMC (1,2-dimethyl carbonate) in a volume ratio of 1:1 served as the electrolyte solution, LiPF6 served as the electrolyte, and a Celgard2400 microporous polyethylene membrane served as the separator.

The prepared button cell was subjected to electrical performance testing by a blue electric tester; specifically, the button cell was subjected to constant-current charge-discharge twice at a rate of 0.1 C within a voltage range of 2.0-3.75 V, and then subjected to constant-current charge-discharge once at a rate of 1 C; in the charge-discharge test at a rate of 1C, the capacity value extracted at a discharge voltage of 3.2 V was recorded as C1, and the capacity value extracted at a discharge voltage of 2.0V was recorded as C2, and η=C1/C2. The charging process included constant-voltage charge, the constant voltage was 3.75 V, and a constant voltage cutoff current was 50 µA.

### 10) Manganese dissolution amount

A fully-charged cell after 100 cycles at 25°C was collected and disassembled in a glove box, the positive electrode plate was taken out in a drying room, and then 1 g of materials was gently scrapped off from a center of the electrode plate with a ceramic knife, it was ensured that the entire active substance layer was scraped off to avoid different manganese content at different thicknesses, and the material was sealed in a ziplock bag and delivered to a laboratory. An electronic scale, a heating plate, a 150ml quartz beaker, watch glass, a funnel, a 100ml volumetric flask, pliers (heat-resistant gloves), a weighing spoon, a lint-free paper, and the like were prepared; whether the calibration date of the electronic scale was valid was checked, expired scales were not used and to be recalibrated; a power supply was connected, and the heating plate could be normally heated to 250°C; 0.2000±0.005 g of powder was weighed and placed into the beaker; acidification treatment: a dilute sulfuric acid solution with a volume ratio of 1:4 (concentrated sulfuric acid: ultrapure water = 1:4) was prepared; 20 ml of the prepared dilute sulfuric acid solution was added to the beaker; the heating plate was preheated to 250°C, then the sample was placed in the beaker to be digested for 30 min; a quartz cap was placed over an opening of the beaker to reduce acid evaporation; after 30 min of digestion, the sample was taken out and cooled to room temperature; the completely digested sample was transferred to the 100ml glass volumetric flask and filled to mark; then, the subsequent operation was carried out according to ICP standard test processes: the test device temperature was 22±2°C and the humidity was <60%; a trace element method was selected to test; calibration standard: a standard curve was determined using the prepared standard solution; the element selected was Mn; and finally, the Mn dissolution amount could be obtained by testing.

### 11) Solid content of positive electrode slurry

An electronic balance (accurate to 0.0001), an oven, and a glass drying tray were prepared. 8-10 g of positive electrode slurry sample was collected and uniformly coated on the sample tray, and the mass of the slurry before drying was recorded as A. An oven door was closed, and heating was carried out. As heating proceeded, the temperature in the furnace continuously rised to 130°C over a period of 5 h. After being dried, the sample was cooled and removed from the oven, and the mass of the dried slurry was recorded; the drying was repeated multiple times until the sample reached a constant weight, and then the mass of the dried sample was recorded as B. Solid content of slurry = (A/B) × 100%.

### 12) Compacted density of electrode plate

The term "compacted density of electrode plate" in the present application refers to the "ultimate compacted density" of the electrode plate, and it was tested by the following methods:
the double-coated electrode plates were cold-pressed using a roller press, and the elongation of the cold-pressed electrode plates was tested, and meanwhile, the flexibility of the cold-pressed electrode plate was evaluated.

By means of increasing the pressure of the roller press, electrode plates with different compacted densities can be obtained; as the pressure increases, the compacted density of the electrode plate increases, the elongation of the electrode plate increases, and the flexibility of the electrode plate decreases. Excessive elongation of the electrode plate easily causes warping, while insufficient flexibility easily leads to brittle breakage. Therefore, the smaller of the compacted density corresponding to the electrode plate elongation of 6‰ or the electrode plate flexible folding times of 3 times is defined as the ultimate compacted density.

The compacted density was calculated by dividing the weight of a positive electrode film layer on one side by the volume of the positive electrode film layer.

### 13) Gram capacity

The specific testing process is briefly described as follows: (1) the battery was placed in a 40°C oven environment and stood for 2 h until the battery temperature was maintained at 40°C; (2) the battery was subjected to constant-current discharge at 1/3C to 2.0 V; (3) it was paused for 5 min; (4) the battery was subjected to constant-current charge at 1/3 C to 4.1 V, and then subjected to constant-voltage discharge of 4.1 V until the cutoff current was 0.05C; (5) it was paused for 5 min; (6) the battery was subjected to constant-current discharge a 1/3 C to 2.0 V. This process is to test the actual cell capacity, and in combination with the mass of the positive electrode active material, the gram capacity of the battery can be calculated: Gram capacity = Capacity / Mass of positive electrode active material.

### 14) High-temperature storage performance

High-temperature storage performance is characterized by storing the battery at 60°C under full charge (charged to 4.1V) and measuring the time for the battery capacity degrades to 80% of initial value.
1, the battery was stood for 10 min, and then subjected to constant-current discharge at 0.33 Cn to 2 V (Cn was the battery capacity at 40°C and 1/3C).
2, the battery was stood for 10 min, then subjected to constant-current charge at 0.33 Cn to 4.1 V, and then subjected to constant-current discharge until the cutoff current was 0.02 Cn.
3, the battery was stood for 2 hour, stored at 60°C for 30 days, and then taken out to test the reversible capacity of the battery cell.

The specific testing process is briefly described as follows: (1) the battery was placed in a 40°C oven environment and stood for 2 h until the battery temperature was maintained at 40°C; (2) the battery was subjected to constant-current discharge at 1/3C to 2.0 V; (3) it was paused for 5 min; (4) the battery was subjected to constant-current charge at 1/3C to 4.1 V, and then subjected to constant-voltage discharge of 4.1 V until the cutoff current was 0.05 C; (5) it was paused for 5 min; (6) the battery was subjected to constant-current discharge at 1/3C to 2.0 V. This process is to test the actual cell capacity.

4. Test was regularly carried out until the reversible capacity of the battery cell degraded to 80% of initial value.

### 15) High-temperature cycling performance

High-temperature cycling performance is characterized by performing 1C/1C cycle 60°C and measuring the number of cycles for the battery capacity degrading to 80% of initial value.

The specific process is briefly described as follows: (1) the battery was placed in a 45°C oven and stood for 2 h until the battery temperature was maintained at 25°C; (2) the battery was subjected to constant-current charge at 1 C to 3.65 V, and continuously subjected to constant-current charge until the charging current was less than 0.05C; (3) it was paused for 5 min; (4) the battery was subjected to constant-current discharge at 1 C to 2.5 V; (5) it was paused for 5 min. Steps (2) to (6) constituted one charge-discharge cycle for the battery, and steps (2) to (6) were repeated continuously until the battery capacity degraded to 80% of initial value.

### 16) Mn/Fe molar ratio

The test method for the molar ratio of Mn can be carried out using methods and devices known in the art, for example, the molar content of elements Mn and Fe can be tested with reference to a chemical analysis method for nano-lithium iron phosphate in national standard GB T33822-2017, and the molar ratio of Mn in the material can be calculated.

### III. Analysis of test results for each example and contrast example

The batteries in each example and contrast example were prepared according to the above methods, and various performance parameters were measured; and the parameters of the positive electrode active material are shown in Tables 1 to 3, the area ratio is shown in Table 4, and the performance test results are shown in Table 5.

**Table 1: Relevant parameters of first particles**

| Instances | Component | Primary average particle size (mm) | BET (m2/g) | Cx | Z | Mn/Fe molar ratio |
|---|---|---|---|---|---|---|
| Example 1 | First lithium iron manganese phosphate | 150 | 14.0 | 1.60 | 8.8 | 1.5 |
| Example 2 | First lithium iron manganese phosphate | 210 | 12.0 | 1.40 | 8.6 | 1.5 |
| Example 3 | First lithium iron manganese phosphate | 120 | 15.0 | 1.65 | 9.1 | 1.5 |
| Example 4 | First lithium iron manganese phosphate | 600 | 10.0 | 1.40 | 7.1 | 1.5 |
| Example 5 | First lithium iron manganese phosphate | 210 | 12.0 | 1.40 | 8.6 | 1.5 |
| Example 6 | First lithium iron manganese phosphate | 210 | 12.0 | 1.40 | 8.6 | 1.5 |
| Example 7 | First lithium iron manganese phosphate | 210 | 12.0 | 1.40 | 8.6 | 1.5 |
| Example 8 | First lithium iron manganese phosphate | 480 | 11.0 | 1.40 | 7.9 | 1.5 |
| Example 9 | First lithium iron manganese phosphate | 210 | 12.0 | 1.40 | 8.6 | 1.5 |
| Example 10 | First lithium iron manganese phosphate | 210 | 12.0 | 1.40 | 8.6 | 1.5 |
| Example 11 | First lithium iron manganese phosphate | 210 | 12.0 | 1.40 | 8.6 | 1.5 |
| Example 12 | First lithium iron manganese phosphate | 210 | 17.0 | 1.80 | 9.4 | 1.5 |
| Example 13 | First lithium iron manganese phosphate | 210 | 10.0 | 1.20 | 8.3 | 1.5 |
| Example 14 | First lithium iron manganese phosphate | 210 | 12.0 | 1.40 | 8.6 | 1.5 |
| Example 15 | First lithium iron manganese phosphate | 210 | 12.0 | 1.40 | 8.6 | 1.5 |
| Example 16 | First lithium iron manganese phosphate | 210 | 12.0 | 1.40 | 8.6 | 1.5 |
| Example 17 | First lithium iron manganese phosphate | 210 | 12.0 | 1.40 | 8.6 | 1.5 |
| Example 18 | First lithium iron manganese phosphate | 210 | 12.0 | 1.40 | 8.6 | 1.5 |
| Example 19 | First lithium iron manganese phosphate | 210 | 12.0 | 1.40 | 8.6 | 1.5 |
| Example 20 | First lithium iron manganese phosphate | 210 | 12.0 | 1.40 | 8.6 | 1.5 |
| Example 21 | First lithium iron manganese phosphate | 210 | 12.0 | 1.40 | 8.6 | 1.5 |
| Example 22 | First lithium iron manganese phosphate | 500 | 10.5 | 1.40 | 7.5 | 1.5 |
| Example 23 | First lithium iron manganese phosphate | 140 | 20.0 | 1.60 | 12.5 | 1.5 |
| Example 24 | First lithium iron manganese phosphate | 210 | 12.0 | 1.40 | 8.6 | 1.5 |
| Example 25 | First lithium iron manganese phosphate | 210 | 12.0 | 1.40 | 8.6 | 1.5 |
| Example 26 | First lithium iron manganese phosphate | 210 | 12.0 | 1.40 | 8.6 | 1.5 |
| Example 27 | First lithium iron manganese phosphate | 210 | 12.0 | 1.40 | 8.6 | 1.5 |
| Example 28 | First lithium iron manganese phosphate | 210 | 12.0 | 1.40 | 8.6 | 1.5 |
| Example 29 | First lithium iron manganese phosphate | 210 | 12.0 | 1.40 | 8.6 | 1.5 |
| Example 30 | First lithium iron manganese phosphate | 210 | 12.0 | 1.40 | 8.6 | 1.5 |
| Example 31 | First lithium iron manganese phosphate | 210 | 12.0 | 1.40 | 8.6 | 1.5 |
| Example 32 | First lithium iron manganese phosphate | 210 | 12.0 | 1.40 | 8.6 | 1.5 |
| Example 33 | First lithium iron manganese phosphate | 210 | 12.0 | 1.40 | 8.6 | 1.5 |
| Example 34 | First lithium iron manganese phosphate | 210 | 12.0 | 1.40 | 8.6 | 1.5 |
| Example 35 | First lithium iron manganese phosphate | 210 | 12.0 | 1.40 | 8.6 | 1.5 |
| Example 36 | First lithium iron manganese phosphate | 210 | 12.0 | 1.40 | 8.6 | 1.5 |
| Example 37 | First lithium iron manganese phosphate | 210 | 12.0 | 1.40 | 8.6 | 1.5 |
| Example 38 | First lithium iron manganese phosphate | 210 | 12.0 | 1.40 | 8.6 | 1.5 |
| Example 39 | First lithium iron manganese phosphate | 210 | 12.0 | 1.40 | 8.6 | 1.5 |
| Example 40 | First lithium iron manganese phosphate | 210 | 12.0 | 1.40 | 8.6 | 1.5 |
| Example 41 | First lithium iron manganese phosphate | 210 | 12.0 | 1.40 | 8.6 | 1.5 |
| Contrast Example 1 | First lithium iron manganese phosphate | 210 | 12.0 | 1.40 | 8.6 | 1.5 |
| Contrast Example 2 | First lithium iron manganese phosphate | 210 | 12.0 | 1.40 | 8.6 | 1.5 |
| Contrast Example 3 | First lithium iron manganese phosphate | 210 | 12.0 | 1.40 | 8.6 | 1.5 |
| Contrast Example 4 | First lithium iron manganese phosphate | 210 | 12.0 | 1.40 | 8.6 | 1.5 |

**Table 2: Relevant parameters of second particles**

| Instances | Component | Primary average particle size (nm) | BET (m2/g) | Cx | Z | Element doped | Doping amount (ppm) | η (%) | Mn/Fe molar ratio |
|---|---|---|---|---|---|---|---|---|---|
| Example 1 | First lithium iron phosphate | 870 | 6.0 | 1.20 | 5. 0 | Ti | 5000 | 92.2 | - |
| Example 2 | First lithium iron phosphate | 870 | 6.0 | 1.20 | 5. 0 | Ti | 5000 | 92.2 | - |
| Example 3 | First lithium iron phosphate | 870 | 6.0 | 1.20 | 5. 0 | Ti | 5000 | 92.2 | - |
| Example 4 | First lithium iron phosphate | 870 | 6.0 | 1.20 | 5. 0 | Ti | 5000 | 92.2 | - |
| Example 5 | First lithium iron phosphate | 250 | 9.5 | 1.20 | 7. 9 | Ti | 5000 | 94.0 | - |
| Example 6 | First lithium iron phosphate | 300 | 7.5 | 1.20 | 6. 3 | Ti | 5000 | 95.1 | - |
| Example 7 | First lithium iron phosphate | 4000 | 4.5 | 1.20 | 3. 8 | Ti | 5000 | 88.0 | - |
| Example 8 | First lithium iron phosphate | 870 | 6.0 | 1.20 | 5. 0 | Ti | 5000 | 92.2 | - |
| Example 9 | First lithium iron phosphate | 3000 | 5.0 | 1.20 | 4. 2 | Ti | 5000 | 90.1 | - |
| Example 10 | First lithium iron phosphate | 3500 | 4.6 | 1.20 | 3. 8 | Ti | 5000 | 90.1 | - |
| Example 11 | First lithium iron phosphate | 500 | 7.0 | 1.20 | 5. 8 | Ti | 5000 | 94.1 | - |
| Example 12 | First lithium iron phosphate | 870 | 6.0 | 1.20 | 5. 0 | Ti | 5000 | 92.2 | - |
| Example 13 | First lithium iron phosphate | 870 | 6.0 | 1.20 | 5. 0 | Ti | 5000 | 92.2 | - |
| Example 14 | First lithium iron phosphate | 870 | 5.5 | 1.15 | 4. 8 | Ti | 5000 | 92.2 | - |
| Example 15 | First lithium iron phosphate | 870 | 5.0 | 1.20 | 4. 2 | Ti | 5000 | 92.2 | - |
| Example 16 | First lithium iron phosphate | 870 | 6.0 | 1.20 | 5. 0 | Ti | 2500 | 90.0 | - |
| Example 17 | First lithium iron phosphate | 870 | 6.0 | 1.20 | 5. 0 | Ti | 6000 | 95.0 | - |
| Example 18 | First lithium iron phosphate | 870 | 8.0 | 1.20 | 6. 7 | V | 5000 | 92.2 | - |
| Example 19 | First lithium iron phosphate | 870 | 6.0 | 1.20 | 5. 0 | Nb | 5000 | 92.2 | - |
| Example 20 | First lithium iron phosphate | 870 | 3.0 | 0.80 | 3. 8 | Ti | 5000 | 88.1 | - |
| Example 21 | First lithium iron phosphate | 870 | 12.0 | 1.40 | 8. 6 | Ti | 5000 | 94.5 | - |
| Example 22 | First lithium iron phosphate | 870 | 6.0 | 1.20 | 5. 0 | Ti | 5000 | 92.2 | - |
| Example 23 | First lithium iron phosphate | 870 | 6.0 | 1.20 | 5. 0 | Ti | 5000 | 92.2 | - |
| Example 24 | First lithium iron phosphate | 870 | 6.0 | 1.20 | 5. 0 | Ti | 5000 | 92.2 | - |
| Example 25 | First lithium iron phosphate | 870 | 6.0 | 1.20 | 5. 0 | Ti | 5000 | 92.2 | - |
| Example 26 | First lithium iron phosphate | 870 | 6.0 | 1.20 | 5. 0 | Ti | 1000 | 88.0 | - |
| Example 27 | First lithium iron phosphate | 870 | 6.0 | 1.20 | 5. 0 | Ti | 10000 | 95.0 | - |
| Example 28 | First lithium iron phosphate | 870 | 6.0 | 1.20 | 5. 0 | Ti | 5000 | 92.2 | - |
| Example 29 | First lithium iron phosphate | 870 | 6.0 | 1.20 | 5. 0 | Ti | 5000 | 92.0 | - |
| Example 30 | First lithium iron phosphate | 870 | 6.0 | 1.20 | 5. 0 | Ti | 5000 | 92.2 | - |
| Example 31 | First lithium iron phosphate | 870 | 6.0 | 1.20 | 5. 0 | Ti | 5000 | 92.2 | - |
| Example 32 | First lithium iron phosphate | 870 | 6.0 | 1.20 | 5. 0 | Ti | 5000 | 92.2 | - |
| Example 33 | First lithium iron phosphate | 870 | 6.0 | 1.20 | 5. 0 | Ti | 5000 | 92.2 | - |
| Example 34 | First lithium iron phosphate | 870 | 6.0 | 1.20 | 5. 0 | Ti | 5000 | 92.2 | - |
| Example 35 | First lithium iron phosphate | 870 | 6.0 | 1.20 | 5. 0 | Ti | 5000 | 92.2 | - |
| Example 36 | Second lithium iron manganese phosphate | 700 | 9.6 | 1.40 | 6. 9 | - | - | - | 1.50 |
| Example 37 | Second lithium iron manganese phosphate | 700 | 9.6 | 1.40 | 6. 9 | - | - | - | 0.67 |
| Example 38 | Second lithium iron manganese phosphate | 700 | 9.6 | 1.40 | 6. 9 | - | - | - | 0.43 |
| Example 39 | Second lithium iron manganese phosphate | 700 | 9.6 | 1.40 | 6. 9 | - | - | - | 0.43 |
| Example 40 | Second lithium iron manganese phosphate | 700 | 9.6 | 1.40 | 6. 9 | - | - | - | 1.50 |
| Example 41 | Second lithium iron manganese phosphate | 700 | 9.6 | 1.40 | 6. 9 | - | - | - | 0.43 |
| Contrast Example 1 | None | - | - | - | - | - | - | - | - |
| Contrast Example 2 | None | - | - | - | - | - | - | - | - |
| Contrast Example 3 | Second lithium iron manganese phosphate | 700 | 9.6 | 1.4 | 6. 9 | - | - | - | 4.00 |
| Contrast Example 4 | None | - | - | - | - | - | - | - | - |

**Table 3: Relevant parameters of third particles**

| Instances | Component | Primary average particle size (nm) | BET (m2/g) | Cx | z | Aspect ratio | w | Mn/Fe molar ratio |
|---|---|---|---|---|---|---|---|---|
| Example 1 | None | - | - | - | - | - | - | - |
| Example 2 | None | - | - | - | - | - | - | - |
| Example 3 | None | - | - | - | - | - | - | - |
| Example 4 | None | - | - | - | - | - | - | - |
| Example 5 | None | - | - | - | - | - | - | - |
| Example 6 | None | - | - | - | - | - | - | - |
| Example 7 | None | - | - | - | - | - | - | - |
| Example 8 | None | - | - | - | - | - | - | - |
| Example 9 | None | - | - | - | - | - | - | - |
| Example 10 | None | - | - | - | - | - | - | - |
| Example 11 | None | - | - | - | - | - | - | - |
| Example 12 | None | - | - | - | - | - | - | - |
| Example 13 | None | - | - | - | - | - | - | - |
| Example 14 | None | - | - | - | - | - | - | - |
| Example 15 | None | - | - | - | - | - | - | - |
| Example 16 | None | - | - | - | - | - | - | - |
| Example 17 | None | - | - | - | - | - | - | - |
| Example 18 | None | - | - | - | - | - | - | - |
| Example 19 | None | - | - | - | - | - | - | - |
| Example 20 | None | - | - | - | - | - | - | - |
| Example 21 | None | - | - | - | - | - | - | - |
| Example 22 | None | - | - | - | - | - | - | - |
| Example 23 | None | - | - | - | - | - | - | - |
| Example 24 | None | - | - | - | - | - | - | - |
| Example 25 | None | - | - | - | - | - | - | - |
| Example 26 | None | - | - | - | - | - | - | - |
| Example 27 | None | - | - | - | - | - | - | - |
| Example 28 | Second lithium iron phosphate | 60 | 12.0 | 1.4 | 8.9 | 1.1 | 0.98 | - |
| Example 29 | Second lithium iron phosphate | 60 | 12.0 | 1.4 | 8.9 | 1.1 | 0.98 | - |
| Example 30 | Second lithium iron phosphate | 60 | 12.0 | 1.4 | 8.9 | 1.1 | 0.98 | - |
| Example 31 | Second lithium iron phosphate | 60 | 12.0 | 1.4 | 8.9 | 1.1 | 0.98 | - |
| Example 32 | Second lithium iron phosphate | 30 | 14.0 | 1.4 | 10.4 | 1.1 | 0.98 | - |
| Example 33 | Second lithium iron phosphate | 200 | 11.0 | 1.4 | 8.1 | 1.1 | 0.98 | - |
| Example 34 | Second lithium iron phosphate | 60 | 12.0 | 1.4 | 8.9 | 1.3 | 1.03 | - |
| Example 35 | Second lithium iron phosphate | 60 | 12.0 | 1.4 | 8.9 | 1.3 | 1.08 | - |
| Example 36 | Third lithium iron manganese phosphate | 80 | 22.0 | 1.4 | 15.7 | - | - | 0.43 |
| Example 37 | Third lithium iron manganese phosphate | 80 | 22.0 | 1.4 | 15.7 | - | - | 0.43 |
| Example 38 | Third lithium iron manganese phosphate | 80 | 22.0 | 1.4 | 15.7 | - | - | 1.50 |
| Example 39 | Third lithium iron manganese phosphate | 80 | 22.0 | 1.4 | 15.7 | - | - | 0.67 |
| Example 40 | None | - | - | - | - | - | - | - |
| Example 41 | None | - | - | - | - | - | - | - |
| Contrast Example 1 | None | - | - | - | - | - | - | - |
| Contrast Example 2 | Second lithium iron phosphate | 60 | 12.0 | 1.4 | 8.9 | 1.1 | 0.98 | - |
| Contrast Example 3 | None | - | - | - | - | - | - | - |
| Contrast Example 4 | Third lithium iron manganese phosphate | 80 | 22.0 | 1.4 | 15.7 | - | - | 4.00 |

**Table 4: Area ratios of first particles, second particles, and third particles**

| Instances | First particles | Second particles | Third particles |
|---|---|---|---|
| Example 1 | 75 | 25 | 0 |
| Example 2 | 75 | 25 | 0 |
| Example 3 | 75 | 25 | 0 |
| Example 4 | 75 | 25 | 0 |
| Example 5 | 75 | 25 | 0 |
| Example 6 | 75 | 25 | 0 |
| Example 7 | 75 | 25 | 0 |
| Example 8 | 75 | 25 | 0 |
| Example 9 | 75 | 25 | 0 |
| Example 10 | 75 | 25 | 0 |
| Example 11 | 75 | 25 | 0 |
| Example 12 | 75 | 25 | 0 |
| Example 13 | 75 | 25 | 0 |
| Example 14 | 75 | 25 | 0 |
| Example 15 | 75 | 25 | 0 |
| Example 16 | 75 | 25 | 0 |
| Example 17 | 75 | 25 | 0 |
| Example 18 | 75 | 25 | 0 |
| Example 19 | 75 | 25 | 0 |
| Example 20 | 75 | 25 | 0 |
| Example 21 | 75 | 25 | 0 |
| Example 22 | 75 | 25 | 0 |
| Example 23 | 75 | 25 | 0 |
| Example 24 | 70 | 30 | 0 |
| Example 25 | 98 | 2 | 0 |
| Example 26 | 75 | 25 | 0 |
| Example 27 | 75 | 25 | 0 |
| Example 28 | 72 | 25 | 3 |
| Example 29 | 70 | 25 | 5 |
| Example 30 | 65 | 25 | 10 |
| Example 31 | 74 | 25 | 1 |
| Example 32 | 74 | 23 | 3 |
| Example 33 | 74 | 23 | 3 |
| Example 34 | 74 | 23 | 3 |
| Example 35 | 74 | 23 | 3 |
| Example 36 | 75 | 23 | 2 |
| Example 37 | 75 | 23 | 2 |
| Example 38 | 75 | 23 | 2 |
| Example 39 | 75 | 23 | 2 |
| Example 40 | 75 | 25 | 0 |
| Example 41 | 75 | 25 | 0 |
| Contrast Example 1 | 100 | 0 | 0 |
| Contrast Example 2 | 95 | 0 | 5 |
| Contrast Example 3 | 75 | 25 | 0 |
| Contrast Example 4 | 75 | 0 | 25 |

**Table 5: Performance test results**

| Instances | Magnesium dissolution amount (ppm) | Solid content of positive electrode slurry (%) | High-temperature storage performance (days) | High-temperature storage performance (cycles) | Gram capacity (mAh/g) | Compacted density of electrode plate (g/cm³) |
|---|---|---|---|---|---|---|
| Example 1 | 25.0 | 53.0 | 480.0 | 800.0 | 144.0 | 2.46 |
| Example 2 | 20.0 | 55.0 | 590.0 | 980.0 | 144.5 | 2.52 |
| Example 3 | 28.0 | 52.0 | 465.0 | 730.0 | 143.0 | 2.42 |
| Example 4 | 18.0 | 56.0 | 605.0 | 1050.0 | 140.0 | 2.48 |
| Example 5 | 30.0 | 52.0 | 510.0 | 870.0 | 144.0 | 2.45 |
| Example 6 | 28.0 | 53.0 | 530.0 | 890.0 | 143.5 | 2.48 |
| Example 7 | 14.0 | 59.0 | 608.0 | 880.0 | 139.0 | 2.42 |
| Example 8 | 18.5 | 55.5 | 600.0 | 1000.0 | 141.0 | 2.49 |
| Example 9 | 18.0 | 57.0 | 610.0 | 925.0 | 141.0 | 2.46 |
| Example 10 | 16.0 | 58.5 | 605.0 | 910.0 | 140.0 | 2.44 |
| Example 11 | 24.0 | 54.0 | 565.0 | 935.0 | 143.2 | 2.50 |
| Example 12 | 35.0 | 52.0 | 455.0 | 760.0 | 143.5 | 2.44 |
| Example 13 | 18.0 | 56.0 | 600.0 | 950.0 | 141.0 | 2.53 |
| Example 14 | 16.0 | 57.0 | 600.0 | 990.0 | 141.5 | 2.53 |
| Example 15 | 14.0 | 58.0 | 610.0 | 1010.0 | 141.2 | 2.54 |
| Example 16 | 20.0 | 55.0 | 588.0 | 976.0 | 142.8 | 2.48 |
| Example 17 | 20.0 | 55.0 | 594.0 | 967.0 | 142.0 | 2.49 |
| Example 18 | 20.0 | 55.0 | 572.0 | 956.0 | 142.5 | 2.51 |
| Example 19 | 20.0 | 55.0 | 565.0 | 950.0 | 142.5 | 2.48 |
| Example 20 | 12.0 | 59.0 | 625.0 | 1025.0 | 140.0 | 2.55 |
| Example 21 | 28.0 | 53.0 | 580.0 | 970.0 | 143.5 | 2.39 |
| Example 22 | 28.0 | 58.0 | 428.6 | 714.3 | 137.0 | 2.36 |
| Example 23 | 45.0 | 51.0 | 420.0 | 720.0 | 142.0 | 2.34 |
| Example 24 | 18.0 | 56.0 | 600.0 | 995.0 | 143.5 | 2.53 |
| Example 25 | 48.0 | 50.5 | 390.0 | 600.0 | 139.0 | 2.28 |
| Example 26 | 20.0 | 55.0 | 580.0 | 970.0 | 140.0 | 2.48 |
| Example 27 | 20.0 | 55.0 | 585.0 | 927.0 | 141.0 | 2.49 |
| Example 28 | 16.0 | 55.0 | 625.0 | 1080.0 | 143.3 | 2.56 |
| Example 29 | 18.0 | 54.0 | 600.0 | 1000.0 | 143.5 | 2.55 |
| Example 30 | 15.0 | 53.0 | 635.0 | 1110.0 | 144.2 | 2.48 |
| Example 31 | 17.0 | 55.0 | 615.0 | 1050.0 | 143.1 | 2.53 |
| Example 32 | 15.0 | 54.0 | 635.0 | 1120.0 | 143.0 | 2.54 |
| Example 33 | 14.0 | 56.0 | 645.0 | 1160.0 | 143.6 | 2.52 |
| Example 34 | 15.0 | 55.0 | 630.0 | 1085.0 | 143.5 | 2.56 |
| Example 35 | 15.0 | 55.0 | 635.0 | 1088.0 | 144.0 | 2.56 |
| Example 36 | 40.0 | 54.5 | 480.0 | 790.0 | 139.4 | 2.55 |
| Example 37 | 37.0 | 54.4 | 495.0 | 820.0 | 140.0 | 2.55 |
| Example 38 | 33.0 | 54.4 | 450.0 | 750.0 | 141.5 | 2.55 |
| Example 39 | 31.0 | 54.6 | 465.0 | 770.0 | 141.0 | 2.55 |
| Example 40 | 38.0 | 55.0 | 500.0 | 835.0 | 138.5 | 2.46 |
| Example 41 | 28.0 | 55.1 | 530.0 | 870.0 | 140.0 | 2.46 |
| Contrast Example 1 | 65.0 | 49.0 | 342.9 | 571.4 | 136.0 | 2.22 |
| Contrast Example 2 | 60.0 | 49.0 | 370.0 | 591.0 | 137.0 | 2.28 |
| Contrast Example 3 | 52.0 | 55.1 | 260.0 | 370.0 | 131.3 | 2.46 |
| Contrast Example 4 | 75.0 | 53.2 | 180.0 | 330.0 | 133.5 | 2.30 |

On the basis of the above results, the secondary batteries in the Examples 1 to 41 include:
the positive electrode plate, the negative electrode plate, the separator arranged between the positive electrode plate and the negative electrode plate, and the electrolyte solution including the electrolyte salt and the solvent;
the positive electrode plate includes the positive electrode current collector and the positive electrode film layer arranged on at least one surface of the positive electrode current collector;
the positive electrode film layer includes the first particles, the first particles including the first lithium iron manganese phosphate particles, the primary average particle size s1 of the first particles being 120-600 nm; and
the manganese dissolution amount of the secondary battery is ≤50 ppm.

According to the comparison between Examples 1 to 41 and Contrast Examples 1 to 4, the secondary battery in the embodiment of the present application has good high-temperature storage performance. In addition, the secondary battery in the embodiment of present application also has good high-temperature cycling performance.

According to the comparison between Examples 1 to 41 and Contrast Examples 1 to 3, if the positive electrode film layer further includes the second particles, the second particles including the first lithium iron phosphate particles and/or second lithium iron manganese phosphate particles, the primary average particle size s2 of the second particles meeting 500nm≤s2≤3000nm, and the Mn/Fe molar ratio of the second lithium iron manganese phosphate particles being ≤1.5, the secondary battery in the embodiment of the present application has low manganese dissolution amount, good high-temperature storage performance, and good high-temperature cycling performance.

According to the comparison between Examples 36 to 41 and Contrast Example 3, if the Mn/Fe molar ratio of the second lithium iron manganese phosphate particles is ≤1.5, the secondary battery in the present application has low manganese dissolution amount, good high-temperature storage performance, good high-temperature cycling performance, and high gram capacity.

According to the comparison between Examples 1 to 41 and Contrast Examples 1 to 2 and 4, if the positive electrode film layer further includes the second particles, the second particles including the first lithium iron phosphate particles and/ or second lithium iron manganese phosphate particles, the primary average particle size s2 of the second particles meeting 500 nm≤s2≤3000 nm, and the Mn/Fe molar ratio of the second lithium iron manganese phosphate particles being ≤1.5, the secondary battery in the embodiment of the present application has low manganese dissolution amount, good high-temperature storage performance, and good high-temperature cycling performance.

According to the comparison between Examples 36 to 39 and Contrast Example 4, if the Mn/Fe molar ratio of the third lithium iron manganese phosphate particles is ≤1.5, the secondary battery in the embodiment of the present application has low manganese dissolution amount, good high-temperature storage performance, good high-temperature cycling performance, high gram capacity, high solid content of positive electrode slurry, and high compacted density of the positive electrode plate.

According to the comparison between the Examples 2, 9, and 11 and the Contrast Examples 5 to 6, if the positive electrode film layer also includes the first lithium iron phosphate particles, the primary average particle size s1 of the first lithium iron phosphate particles meeting 500nm≤s1≤3000nm, the secondary battery in the embodiment of the present application has low manganese dissolution amount, good high-temperature storage performance, good high-temperature cycling performance, and high solid content of the positive electrode slurry.

According to the comparison between the Examples 2, 9, and 10 to 11 and the Contrast Examples 5 to 6, if the positive electrode film layer also includes the first lithium iron phosphate particles, the primary average particle size s1 of the first lithium iron phosphate particles meeting 500nm≤s1≤3500nm, the secondary battery in the embodiment of the present application has low manganese dissolution amount, good high-temperature storage performance, good high-temperature cycling performance, and high solid content of the positive electrode slurry.

According to the comparison between the Examples 2, 7, 9, and 10 to 11 and the Contrast Examples 5 to 6, if the positive electrode film layer also includes the first lithium iron phosphate particles, the primary average particle size s1 of the first lithium iron phosphate particles meeting 500nm≤s1≤4000nm, the secondary battery in the embodiment of the present application has low manganese dissolution amount, good high-temperature storage performance, and high solid content of the positive electrode slurry.

According to the comparison between the Example 2 and the Contrast Examples 28 to 35, if the positive electrode film layer also includes the second lithium iron phosphate particles, the primary average particle size s2 of the second lithium iron phosphate particles meeting 30nm≤s2≤200nm, the secondary battery in the embodiment of the present application has low manganese dissolution amount, good high-temperature storage performance, and good high-temperature cycling performance.

According to the comparison between the Examples 2, 16 to 17 and the Contrast Examples 26 to 27, on the basis of the total weight of the first lithium iron phosphate particles, if the Ti content in the first lithium iron phosphate particles is 2,500-6,000 ppm, the secondary battery in the embodiment of the present application has good high-temperature storage performance and high gram capacity.

According to the comparison between the Examples 2, 14 to 15, 18, and 20 and the Contrast Example 21, if the specific surface area of the first lithium iron phosphate particles is 3 m²/g-8 m²/g, the secondary battery in the embodiment of the present application has low manganese dissolution amount, high solid content of the positive electrode slurry, and high compacted density of the positive electrode plate.

According to the comparison between the Examples 2, 10 to 11, and 16 and the Contrast Example 17, if the specific surface area of the first lithium iron phosphate particles is 3 m²/g-6 m²/g, the secondary battery in the embodiment of the present application has good high-temperature storage performance, good high-temperature cycling performance, and high positive electrode compacted density.

According to the comparison between the Examples 2, 14 to 15, and 20 and the Contrast Example 21, on the basis of the total weight of the first lithium iron phosphate particles, the carbon content of the first lithium iron phosphate particles is Cx1 wt%, and if 0.8≤Cx1≤1.2, the secondary battery in the embodiment of the present application has good high-temperature storage performance, low manganese dissolution amount, high solid content of the positive electrode slurry, good high-temperature cycling performance, and high positive electrode plate compacted density.

According to the comparison between the Examples 2, 14 to 15, and 20 and the Contrast Example 21, if the ratio z1 of the specific surface area of the first lithium iron phosphate particles to Cx1 meets 3.8≤z1≤5, the secondary battery in the embodiment of the present application has good high-temperature storage performance, low manganese dissolution amount, high solid content of positive electrode slurry, good high-temperature cycling performance, and high positive electrode plate compacted density.

According to the comparison between the Examples 34 to 35, and the Contrast Example 28, if the aspect ratio of the second lithium iron phosphate particles is ≥1.3, the secondary battery in the embodiment of the present application has good high-temperature storage performance, low manganese dissolution amount, good high-temperature cycling performance, and high gram capacity.

According to the comparison between the Examples 34 to 35 and the Contrast Example 28, if the ratio W of the intensity of the (020) crystal plane diffraction peak to the intensity of the (211) crystal plane diffraction peak of the second lithium iron phosphate particles is ≥1.03, the secondary battery in the embodiment of the present application has good high-temperature storage performance, low manganese dissolution amount, good high-temperature cycling performance, and high gram capacity.

According to the comparison between the Examples 2, and 12 to 13 and the Contrast Example 23, if the specific surface area of the lithium iron manganese phosphate particles is 10 m²/g-17 m²/g, the secondary battery in the embodiment of the present application has good high-temperature storage performance, low manganese dissolution amount, good high-temperature cycling performance, and high positive electrode compacted density.

It is to be noted that the present application is not limited to the above embodiments. The above embodiments are examples only, and any embodiment that has substantially the same constitutions and has the same effects as the technical ideas within the scope of the technical solutions of the present application is encompassed within the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A secondary battery, comprising:
a positive electrode plate, a negative electrode plate, a separator arranged between the positive electrode plate and the negative electrode plate, and an electrolyte solution comprising an electrolyte salt and a solvent, wherein
the positive electrode plate comprises a positive electrode current collector and a positive electrode film layer arranged on at least one surface of the positive electrode current collector;
the positive electrode film layer comprises first particles, the first particles comprising first lithium iron manganese phosphate particles, a primary average particle size s1 of the first particles being 120-600 nm; and
a manganese dissolution amount of the secondary battery is ≤50 ppm.

2. The secondary battery according to claim 1, wherein the positive electrode film layer further comprises second particles, the second particles comprising first lithium iron phosphate particles and/or second lithium iron manganese phosphate particles, a primary average particle size s2 of the second particles meeting 500nm≤s2≤3000nm, and a Mn/Fe molar ratio of the second lithium iron manganese phosphate particles being ≤1.5.

3. The secondary battery according to claim 2, wherein on the basis of the total area of primary particles in the positive electrode film layer, an area ratio of the first particles is 60%-98%, and the area ratio of the second particles is 2%-40%.

4. The secondary battery according to any one of claims 1 to 3, wherein the positive electrode film layer further comprises first lithium iron phosphate particles, a primary average particle size s2' of the first lithium iron phosphate particles meeting 500nm≤s2'≤3000nm.

5. The secondary battery according to any one of claims 2 to 4, wherein on the basis of the total area of primary particles in the positive electrode film layer, the area ratio of the first lithium iron manganese phosphate particles is 70%-98%, and the area ratio of the first lithium iron phosphate particles is 2%-30%.

6. The secondary battery according to any one of claims 2 to 5, wherein the positive electrode film layer further comprises third particles, the third particles comprising second lithium iron phosphate particles and/or third lithium iron manganese phosphate particles, a primary average particle size s3 of the third particles meeting 30nm≤s3≤200nm, and the Mn/Fe molar ratio of the third lithium iron manganese phosphate particles being ≤1.5.

7. The secondary battery according to claim 6, wherein on the basis of the total area of primary particles in the positive electrode film layer, the area ratio of the first particles is 70%-97%; the area ratio of the second particles is 2%-25%; and the area ratio of the third particles is 1%-10%.

8. The secondary battery according to any one of claims 2 to 7, wherein the positive electrode film layer further comprises second lithium iron phosphate particles, a primary average particle size s3' of the second lithium iron phosphate particles meeting 30nm≤s3'≤200nm.

9. The secondary battery according to any one of claims 6 to 8, wherein on the basis of the total area of primary particles in the positive electrode film layer, the area ratio of the first lithium iron manganese phosphate particles is 70%-97%; the area ratio of the first lithium iron phosphate particles is 2-25%; and the area ratio of the second lithium iron phosphate particles is 1-10%.

10. The secondary battery according to any one of claims 1 to 9, wherein the first lithium iron manganese phosphate particles have a molecular formula of Liₘ₁Feₓ₁Mnᵣ₁P_{y1}Oⱼ₁Q1_{q1}, in which, Q1 comprises at least one selected from the group consisting of Al, Na, K, Mg, Cu, Cr, Zn, Pb, Ca, Co, Ni, Sr, Nb, V, Ti, B, S, Si, N, F, Cl, and Br, 0.95≤m1≤1.15, x1>0, r1>0, 0.9≤x1+r1≤1, 0.95≤y1≤1, 3.5≤j1≤4, 0≤q1≤0.1, and/or
the second lithium iron manganese phosphate particles have the molecular formula of Liₘ₂Feₓ₂Mnᵣ₂P_{y2}Oⱼ₂Q2_{q2}, in which, Q2 comprises at least one selected from the group consisting of Al, Na, K, Mg, Cu, Cr, Zn, Pb, Ca, Co, Ni, Sr, Nb, V, Ti, B, S, Si, N, F, Cl, and Br, 0.95≤m2≤1.15, x2>0, r2>0, r2/x2≤1.5; 0.9≤x2+r2≤1, 0.95≤y2≤1, 3.5≤j2≤4, 0≤q2≤0.1, and/or
the third lithium iron manganese phosphate particles have the molecular formula of Liₘ₃Feₓ₃Mnᵣ₃P_{y3}Oⱼ₃Q3_{q3}, in which, Q3 comprises at least one selected from the group consisting of Al, Na, K, Mg, Cu, Cr, Zn, Pb, Ca, Co, Ni, Sr, Nb, V, Ti, B, S, Si, N, F, Cl, and Br, 0.95≤m3≤1.15, x3>0, r3>0, r3/x3≤1.5; 0.9≤x3+r3≤1, 0.95≤y3≤1, 3.5≤j3≤4, 0≤q3≤0.1, and/or
the first lithium iron phosphate particles have the molecular formula of Liₘ₄Feₓ₄P_{y4}Oⱼ₄Q4_{q4}, in which, Q4 comprises at least one selected from the group consisting of Al, Na, K, Mg, Cu, Mn, Cr, Zn, Pb, Ca, Co, Ni, Sr, Nb, V, Ti, B, S, Si, N, F, Cl, and Br, 0.95≤m4≤1.15, 0.9≤x4≤1, 0.95≤y4≤1, 3.5≤j4≤4, 0<q4≤0.1, and/or
the second lithium iron phosphate particles have the molecular formula of Liₘ₅Feₓ₅P_{y5}Oⱼ₅Q2_{q5}, in which, Q5 comprises at least one selected from the group consisting of Al, Na, K, Mg, Cu, Mn, Cr, Zn, Pb, Ca, Co, Ni, Sr, Nb, V, Ti, B, S, Si, N, F, Cl, and Br, 0.95≤m5≤1.15, 0.9≤x5≤1, 0.95≤y5≤1, 3.5≤j5≤4, and 0≤q5≤0.1.

11. The secondary battery according to claim 10, wherein Q4 in the first lithium iron phosphate particles comprises at least one selected from the group consisting of Ti, V, Mg, and Nb, and the content of Ti, V, Mg and/or Nb is 1,000-10,000 ppm on the basis of the total weight of the first lithium iron phosphate particles.

12. The secondary battery according to any one of claims 2 to 11, wherein a specific surface area of the first lithium iron phosphate particles is 3m²/g-8 m²/g.

13. The secondary battery according to any one of claims 2 to 12, wherein on the basis of the total weight of the first lithium iron phosphate particles, the carbon content of the first lithium iron phosphate particles is Cx4 wt%, in which, 0.8≤Cx4≤2.0.

14. The secondary battery according to any one of claims 2 to 13, wherein the specific surface area of the second lithium iron manganese phosphate particles is 5 m²/g-12 m²/g.

15. The secondary battery according to any one of claims 2 to 14, wherein on the basis of total weight of the second lithium iron manganese phosphate particles, the carbon content of the second lithium iron manganese phosphate particles is Cx2 wt%, in which, 0.8≤Cx2≤2.0.

16. The secondary battery according to any one of claims 1 to 15, wherein the primary average particle size s1' of the first lithium iron manganese phosphate particles is 150-210 nm, the primary average particle size s2' of the first lithium iron phosphate particles meets 870nm≤s2'≤3000nm, and/or the primary average particle size s3' of the second lithium iron phosphate particles meets 60nm≤s3'≤200nm.

17. The secondary battery according to any one of claims 2 to 16, wherein a capacity ratio η of the first lithium iron phosphate particles is ≥ 88%, η is defined as follows:
a battery using the first lithium iron phosphate particles as a positive electrode active material is subjected to constant current charge-discharge twice at a rate of 0.1 C within a voltage range of 2.0-3.75 V, and then subjected to constant current charge-discharge once at a rate of 1 C; in the charge-discharge test at the rate of 1 C, a capacity value extracted at a discharge voltage of 3.2 V is recorded as C1, and the capacity value extracted at the discharge voltage of 2.0 V is recorded as C2, and η=C1/C2; and a charging process comprises charging at a constant voltage, the constant voltage is 3.75 V, and a constant voltage cutoff current is 50 µA.

18. The secondary battery according to any one of claims 2 to 17, wherein the first lithium iron phosphate particles meet at least one selected from the group consisting of (a)-(f):
(a) the Dv10 of the first lithium iron phosphate particles is ≥0.2µm;
(b) the Dv50 of the first lithium iron phosphate particles is 0.5-5µm;
(c) the Dv90 of the first lithium iron phosphate particles is ≤10µm;
(d) the Dv99 of the first lithium iron phosphate particles is ≤12µm;
(e) a powder compacted density of the first lithium iron phosphate under 3 tons of pressure is ≥2.25g/cm³; and
(f) a powder resistivity of the first lithium iron phosphate is less than 60 Ω•cm.

19. The secondary battery according to any one of claims 6 to 18, wherein an aspect ratio of the second lithium iron phosphate particles is ≥1.3.

20. The secondary battery according to any one of claims 6 to 19, wherein a ratio W of an intensity of a (020) crystal plane diffraction peak to the intensity of a (211) crystal plane diffraction peak of the second lithium iron phosphate particles is ≥1.03.

21. The secondary battery according to any one of claims 2 to 20, wherein the first lithium iron phosphate particles are mainly obtained by the following preparation method:
providing raw materials containing at least a lithium source, an iron source, a phosphorus source, a carbon film-forming agent, a carbon source, and a modifier, and performing sintering at least twice, in which,
a temperature for first sintering is 500°C-760°C; and
the temperature for second sintering is 700°C-800°C.

22. The secondary battery according to claim 21, wherein the first lithium iron phosphate particles are mainly obtained by the following preparation method:
providing raw materials containing at least a lithium source, an iron source, a phosphorus source, a carbon source, a carbon film-forming agent, and a modifier, and performing sintering at least twice, in which,
the carbon content of the material after the first sintering is 0.01wt%-0.79wt%; and
the carbon content of the material after the second sintering is 0.8wt%-2.0wt%.

23. The secondary battery according to claim 21 or 22, wherein the preparation method for the first lithium iron phosphate particles comprises the following steps:
performing first pulverization after the first sintering, and performing second pulverization after the second sintering, in which,
the Dv50 of a product after the first pulverization is 300-1,200 nm; and
the Dv50 of the product after the second pulverization is 500-5,000 nm.

24. An electrical apparatus, comprising the secondary battery according to any one of claims 1 to 23.
